# EUROPEAN PATENT APPLICATION

(11) **EP 4 831 257 A1**
(43) Date of publication of application: **28.10.2026**
(21) Application number: 24907223.2
(22) Date of filing: 09.12.2024
(51) Int. Cl.: C09D 201/00, C09D 5/00, C09D 7/63, C09J 4/02, C09J 5/02, C09J 11/06, C10M 169/00

(54) **PRIMER COMPOSITION, PRODUCTION METHOD FOR LAMINATE, PRODUCTION METHOD FOR LAMINATED STEEL SHEET, AND ADHESIVE COMPOSITION KIT**

(30) Priority: 19.12.2023 JP 2023213834
(71) Applicant: ThreeBond Co., Ltd., Tokyo 192-0398 (JP)
(72) Inventor: SATO, Ryota, Hachioji-shi, Tokyo 192-0398 (JP); SHISHIURA, Ryo, Hachioji-shi, Tokyo 192-0398 (JP); KUSUYAMA, Aki, Hachioji-shi, Tokyo 192-0398 (JP)
(74) Representative: Crow, Martin
(86) International application number: PCT/JP2024/043461
(87) International publication number: WO 2025/134838

(57) **Abstract**

According to the present disclosure, there can be provided a solution which not only can suppress deterioration in performance (deterioration in lubrication performance over time) of a primer composition containing a curing accelerator and a lubricating oil (for example, a press working oil), but also can realize enhancements in curing rate and adhesion strength of an anaerobically curable adhesive. The present disclosure relates to a primer composition containing the following component (A) and the following component (B), wherein the component (A) contains a metal complex (A-1), and the component (A) is in an amount of 35 parts by mass or less based on 100 parts by mass of the component (B):
Component (A): curing accelerator of anaerobically curable adhesive,
Component (B): lubricating oil.

## Description

### TECHNICAL FIELD

The present invention relates to a primer composition, a method for producing a laminate, a method for producing a laminated steel plate, and a composition kit for adhesion.

### BACKGROUND ART

Currently, motors and stators are fabricated through lamination of steel plates and thus formation of laminated steel plates. While assembling of such a laminated steel plate is performed by an assembling method by laser welding, swaging, and/or the like, thinning of such a laminated steel plate progresses due to an increase in motor output, and an assembling method by adhesion with an adhesive is performed (Japanese Patent Laid-Open No. 2006-334648). Also, an assembling method by coating a steel plate with a press working oil to which a curing accelerator is added, and laminating the steel plate and a steel plate coated with an adhesive is performed, for the purposes of enhancements in quality and productivity, simplification of a production process and/or downsizing of production equipment (Japanese Patent Laid-Open No. 2006-334648).

### SUMMARY OF INVENTION

However, although conventional curing accelerators to be added to press working oils have enhanced the curing rate of adhesives, it is concerned that those curing accelerators degrade characteristics (performance) of the press working oils. In particular, conventional curing accelerators have the problem of increasing the coefficient of friction (deteriorating lubrication performance) of press working oils over time, and also have the problem of sometimes causing the occurrence of baking during processing of metals or the like.

An object of the present invention is to provide a technique for not only suppressing deterioration in performance (deterioration in lubrication performance over time) of a primer composition containing a curing accelerator and a lubricating oil (for example, a press working oil), but also enhancing the curing rate and the adhesion strength of an anaerobically curable adhesive.

The present inventors have made studies in order to solve the above object, and as a result, have found a technique for not only suppressing deterioration in performance (deterioration in lubrication performance over time) of a primer composition containing a curing accelerator and a lubricating oil (for example, a press working oil), but also enhancing the curing rate and the adhesion strength of an anaerobically curable adhesive, even in the case where such a curing accelerator is added to such a lubricating oil (for example, a press working oil), thereby leading to completion of the present invention.

The gist of the present invention is described below.

One aspect of the present invention, capable of achieving at least one of the above objects, relates to
[1] A primer composition containing the following component (A) and the following component (B), wherein the component (A) contains a metal complex (A-1), and the component (A) is in an amount of 35 parts by mass or less based on 100 parts by mass of the component (B);
   Component (A): curing accelerator of anaerobically curable adhesive,
   Component (B): lubricating oil.
   The present invention also encompasses, as non-limiting examples of preferred embodiments, embodiments of the following [2] to [8].
[2] The primer composition according to [1], wherein the component (A) is in an amount of 0.1 to 35 parts by mass based on 100 parts by mass of the component (B).
[3] The primer composition according to [1] or [2], wherein the component (A) further contains a solvent (A-2).
[4] The primer composition according to [3], wherein the component (A) consists only of the (A-1) and the (A-2).
[5] The primer composition according to [3] or [4], wherein the (A-2) is a ketone-based solvent and/or an alcohol-based solvent.
[6] The primer composition according to any of [1] to [5], wherein the anaerobically curable adhesive contains one or more compounds selected from the group consisting of a urethane-modified (meth)acrylate, an epoxy-modified (meth)acrylate, and a (meth)acrylate having an aromatic ring.
[7] The primer composition according to any of [1] to [6], for use in assembling of a laminated steel plate.
[8] The primer composition according to any of [1] to [7], wherein the component (B) is a press working oil.
   Another aspect of the present invention, capable of achieving at least one of the above objects, relates to
[9] A primer composition containing the following (A-1), the following (A-2) and the following component (B), wherein a total amount of the (A-1) and the (A-2) is 35 parts by mass or less based on 100 parts by mass of the component (B);
   (A-1): metal complex
   (A-2): solvent
   Component (B): lubricating oil.
   The present invention also encompasses, as non-limiting examples of preferred embodiments, embodiments of the following [10] to [13].
[10] The primer composition according to [9], wherein the total amount of the components (A-1) and (A-2) is 0.1 to 35 parts by mass based on 100 parts by mass of the component (B).
[11] The primer composition according to [9] or [10], wherein the (A-2) is a ketone-based solvent and/or an alcohol-based solvent.
[12] The primer composition according to any of [9] to [11], for use in assembling of a laminated steel plate.
[13] The primer composition according to any of [9] to [12], wherein the component (B) is a press working oil.
   The present invention also encompasses, as non-limiting examples of preferred embodiments, embodiments of the following [14] to [21].
[14] A method for producing a laminate, including
   coating an adherend with the primer composition according to any of [1] to [13],
   coating the adherend, a coating film of the primer composition, or both thereof with an anaerobically curable adhesive, and
   bonding the adherend and an adherend being a bonding object, after coating with the primer composition and coating with the anaerobically curable adhesive, and thereafter curing the anaerobically curable adhesive.
[15] The production method according to [14], wherein the anaerobically curable adhesive contains one or more compounds selected from the group consisting of a urethane-modified (meth)acrylate, an epoxy-modified (meth)acrylate, and a (meth)acrylate having an aromatic ring.
[16] A method for producing a laminated steel plate, using (including) the following Steps 1 to 4;
   Step 1: coating a strip-shaped steel plate with the primer composition according to any of [1] to [13];
   Step 2: punching the strip-shaped steel plate coated with the primer composition into a predetermined shape to obtain a thin steel plate (a thin steel plate coated with the primer composition);
   Step 3: coating the thin steel plate coated with the primer composition, with an anaerobically curable adhesive in a planar or spot-like manner, to bond and laminate the thin steel plate and any other thin steel plate (a thin steel plate being a bonding object); and
   Step 4: curing the anaerobically curable adhesive under predetermined conditions to obtain a laminated steel plate.
[17] The production method according to [16], wherein the anaerobically curable adhesive contains one or more compounds selected from the group consisting of a urethane-modified (meth)acrylate, an epoxy-modified (meth)acrylate, and a (meth)acrylate having an aromatic ring.
[18] A composition kit for adhesion, including an anaerobically curable adhesive and the primer composition according to any of [1] to [13].
[19] The composition kit for adhesion according to [18], wherein the anaerobically curable adhesive contains one or more compounds selected from the group consisting of a urethane-modified (meth)acrylate, an epoxy-modified (meth)acrylate, and a (meth)acrylate having an aromatic ring.
[20] A curing acceleration method of an anaerobically curable adhesive, including curing an anaerobically curable adhesive in a state where a coating film of the primer composition according to any of [1] to [13] and the anaerobically curable adhesive are contacted.
[21] The curing acceleration method according to [20], wherein the anaerobically curable adhesive contains one or more compounds selected from the group consisting of a urethane-modified (meth)acrylate, an epoxy-modified (meth)acrylate, and a (meth)acrylate having an aromatic ring.
   Another aspect of the present invention, capable of achieving at least one of the above objects, relates to the following [22].
[22] A method for producing a primer composition, including mixing the following component (A) and the following component (B) in an amount of 35 parts by mass or less of the component (A) based on 100 parts by mass of the component (B);
   Component (A): curing accelerator of anaerobically curable adhesive,
   Component (B): lubricating oil.
   The present invention also encompasses, as non-limiting examples of preferred embodiments, embodiments of the following [23] to [24].
[23] The production method according to [22], including mixing 0.1 to 35 parts by mass of the component (A) based on 100 parts by mass of the component (B).
[24] The production method according to [22] or [23], wherein the anaerobically curable adhesive contains one or more compounds selected from the group consisting of a urethane-modified (meth)acrylate, an epoxy-modified (meth)acrylate, and a (meth)acrylate having an aromatic ring.

### DESCRIPTION OF EMBODIMENTS

The detail of the present invention is described below. It is noted that the present invention is not limited only to the following embodiments.

Herein, "X to Y" means a range including the numerical values (X and Y) described before and after, as the lower limit value and the upper limit value, and means "X or more and Y or less".

Herein, operations, and measurement of physical properties and the like are performed in conditions of 25°C/relative humidity: 55% RH, unless especially noted.

Herein, the word "(meth)acryloyl" encompasses both of acryloyl and methacryloyl. Similarly, the word "(meth)acrylate" encompasses both of acrylate and methacrylate, the word "(meth)acryl" encompasses both of acryl and methacryl, and the word "(meth)acrylamide" encompasses both of acrylamide and methacrylamide. Accordingly, for example, the word "(meth)acryloyl group" encompasses both of an acryloyl group (H₂C=CH-C(=O)-*) and a methacryloyl group (H₂C=C(CH₃)-C(=O)-*). Here, * represents a linkage site to an adjacent atom. A (meth)acryloyl group may be present in the form of a (meth)acryloyloxy group. Accordingly, a compound having a (meth)acryloyl group may also be, for example, (meth)acrylate.

### <Primer composition>

One aspect (first aspect) of the present invention relates to a primer composition containing the following component (A) and the following component (B), wherein the component (A) contains a metal complex (A-1), and the component (A) is in an amount of 35 parts by mass or less based on 100 parts by mass of the component (B);
Component (A): curing accelerator of anaerobically curable adhesive,
Component (B): lubricating oil.

According to the primer composition according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced.

Hereinafter, the detail of the primer composition according to the present aspect is described. However, the primer composition according to the present aspect is not limited only to the following embodiments.

### [Component (A)]

The component (A) is a curing accelerator of an anaerobically curable adhesive. The component (A) is a component that accelerates curing of an anaerobically curable adhesive (particularly preferably an anaerobically curable adhesive containing components (C) to (E) described below). The primer composition mentioned herein may also refer to a composition containing a curing accelerator.

The curing accelerator contains a metal complex (A-1), and the (A-1) is a main component that accelerates the effect of an anaerobically curable adhesive described below. The curing accelerator may contain, in addition to the (A-1), a solvent (A-2). The (A-2) can dissolve the (A-1) to uniformly disperse the (A-1) in the primer composition, resulting in an enhancement in curing acceleration effect. The component (A) may consist only of the (A-1), or may consist only of the (A-1) and the (A-2).

The primer composition according to the present aspect contains, in addition to the curing accelerator described above, a component (B) described below. Thus, the primer composition according to the present aspect can be used as a lubricant for metal processing, and the primer composition according to the present aspect can be combined with an anaerobically curable adhesive described below, to accelerate curing of the adhesive.

It is preferable that a primer composition according to one embodiment does not contain any curing component such as a reactive resin. In a case where the primer composition does not contain any curing component such as a reactive resin, usually the curing acceleration action of the component (A) does not occur by only the primer composition and curing with only the primer composition does not occur.

The (A-1) is a metal complex. The (A-1) is a main component as a curing accelerator that accelerates curing of an anaerobically curable adhesive described below. The metal complex may be used singly or in combinations of two or more kinds thereof.

Examples of the metal species in the (A-1) metal complex include, but are not particularly limited to, Mg, Ca, Ti, V, Cr, Mn, Fe, Co, Ni, Cu, Zn, Al, and Ag. Such metal species in the metal complex may be used singly or in combinations of two or more kinds thereof. The metal species in the metal complex preferably contains at least one selected from the group consisting of the above-exemplified metal species. Among these, Cu is preferred from the viewpoint of more accelerating the curing rate of an anaerobically curable adhesive. In one embodiment, the metal species in the component (A-1) metal complex is preferably at least one selected from the group consisting of the above-exemplified metal species, and is more preferably Cu.

Specific examples of the (A-1) include, but are not particularly limited to, cobalt naphthenate, cobalt octoate, copper naphthenate, copper neodecanoate, copper 2-ethylhexanoate, and vanadyl acetylacetonate. These may be used singly or in combinations of two or more kinds thereof. In particular, preferred examples include copper naphthenate, copper neodecanoate, and copper 2-ethylhexanoate from the viewpoint of more accelerating the curing rate of an anaerobically curable adhesive. The (A-1): metal complex preferably contains at least one compound selected from the group consisting of the above-exemplified compounds. In one embodiment, the (A-1): metal complex is preferably at least one compound selected from the group consisting of the above-exemplified compounds, more preferably at least one compound selected from the group consisting of copper naphthenate, copper neodecanoate and copper 2-ethylhexanoate, further preferably copper neodecanoate.

A curing accelerator in one embodiment may contain a solvent as the (A-2). Various solvents can be used as the (A-2).

The boiling point of the solvent is not particularly limited, and is preferably less than 80°C. In one embodiment, the (A-2) preferably contains a solvent having a boiling point of less than 80°C, and is more preferably a solvent having a boiling point of less than 80°C. Herein, the boiling point represents a value at 1 atm (760 mmHg, 1013.25 hPa).

Examples of the (A-2): solvent include, but are not particularly limited to, a ketone-based solvent, an alcohol-based solvent, a hydrocarbon-based solvent, an ester-based solvent, a glycol-based solvent, and a glycol ether-based solvent. These solvents may be used singly or in combinations of two or more kinds thereof. The (A-2): solvent is preferably at least one selected from the group consisting of a ketone-based solvent, an alcohol-based solvent, a hydrocarbon-based solvent, an ester-based solvent, a glycol-based solvent and a glycol ether-based solvent, more preferably a ketone-based solvent and/or an alcohol-based solvent, further preferably a ketone-based solvent, from the viewpoint of solubility and dispersibility of the (A-1). Examples of the ketone-based solvent include acetone, methyl ethyl ketone, methyl isobutyl ketone, diisobutyl ketone, cyclohexanone, and diacetone alcohol, but not limited thereto. These can be used singly or in combinations of two or more kinds thereof. Examples of the alcohol-based solvent include methanol, ethanol, modified ethanol, isopropyl alcohol, normal propyl alcohol, isobutyl alcohol, higher alcohol (alcohol having 6 or more carbon atoms), and benzyl alcohol, but not limited thereto. These can be used singly or in combinations of two or more kinds thereof. Examples of the hydrocarbon-based solvent include benzene, toluene, xylene, styrene, normal hexane, isohexane, cyclohexane, methylcyclohexane, normal heptane, and a mineral spirit, but not limited thereto. These solvents can be used singly or as a mixture of two or more kinds thereof. Herein, the mineral spirit is a mixture containing a hydrocarbon having 9 to 16 carbon atoms, and is a mixture of an aliphatic hydrocarbon and an aromatic hydrocarbon. The mineral spirit is preferably a mixture of a hydrocarbon compound having a boiling point in a range of 100 to 300°C. In one embodiment, the (A-2): solvent may contain at least one solvent selected from the group consisting of the above-exemplified solvents, or may contain at least one ketone-based solvent selected from the group consisting of the above-exemplified ketone-based solvents. In one embodiment, the (A-2): solvent may be at least one ketone-based solvent selected from the group consisting of the above-exemplified ketone-based solvents, or may be acetone.

In a case where the component (A) contains the (A-1) and the (A-2), the content ratio of the (A-1) and the (A-2) is not particularly limited. When the component (A) contains the (A-1) and the (A-2), the (A-1) is preferably contained in an amount of 0.1 to 200 parts by mass based on 100 parts by mass of the (A-2), the (A-1) is more preferably contained in an amount of 1 to 100 parts by mass based on 100 parts by mass of the (A-2), the (A-1) is further preferably contained in an amount of 2 to 50 parts by mass based on 100 parts by mass of the (A-2), and the (A-1) is further preferably contained in an amount of 2 to 20 parts by mass based on 100 parts by mass of the (A-2). The (A-1) may be contained in an amount of 5 to 20 parts by mass based on 100 parts by mass of the (A-2), the (A-1) may be contained in an amount of 5 to 17 parts by mass based on 100 parts by mass of the (A-2), the (A-1) may be contained in an amount of 5 to 15 parts by mass based on 100 parts by mass of the (A-2), the (A-1) may be contained in an amount of 5 to 12 parts by mass based on 100 parts by mass of the (A-2), or the (A-1) may be contained in an amount of 5 to 10 parts by mass based on 100 parts by mass of the (A-2). The (A-1) may be contained in an amount of 9 to 20 parts by mass based on 100 parts by mass of the (A-2), the (A-1) may be contained in an amount of 10 to 20 parts by mass based on 100 parts by mass of the (A-2), the (A-1) may be contained in an amount of 12 to 20 parts by mass based on 100 parts by mass of the (A-2), or the (A-1) may be contained in an amount of 15 to 20 parts by mass based on 100 parts by mass of the (A-2). The (A-1) may be contained in an amount of 2 to 12 parts by mass based on 100 parts by mass of the (A-2), the (A-1) may be contained in an amount of 5 to 12 parts by mass based on 100 parts by mass of the (A-2), or the (A-1) may be contained in an amount of 7 to 12 parts by mass based on 100 parts by mass of the (A-2). The (A-1) may be contained in an amount of 2 to 10 parts by mass based on 100 parts by mass of the (A-2), the (A-1) may be contained in an amount of 5 to 10 parts by mass based on 100 parts by mass of the (A-2), or the (A-1) may be contained in an amount of 7 to 10 parts by mass based on 100 parts by mass of the (A-2). When the (A-1) is contained in an amount of 0.1 to 200 parts by mass based on 100 parts by mass of the (A-2), dispersibility in the component (B) can be enhanced without deterioration in characteristics of the curing accelerator. In a case where two or more of such components (A-1) are used in combination, the amount of the (A-1) represents the total amount of such components. In a case where two or more of such components (A-2) are used in combination, the amount of the (A-2) represents the total amount of such components.

The content of the (A-1) is not particularly limited, and is preferably 0.1 to 25% by mass, more preferably 0.3 to 20% by mass, further preferably 0.4 to 10% by mass, further preferably 0.4 to 2.5% by mass, further preferably 0.4 to 1.5% by mass, based on 100% by mass of the primer composition (based on the total mass of the primer composition). The content of the (A-1) may be 0.4 to 2.1% by mass, may be 0.4 to 1% by mass, may be 0.4 parts by mass or more and less than 0.9% by mass, or may be 0.4 to 0.8% by mass, based on 100% by mass of the primer composition. The content of the (A-1) may be 0.6 to 2.5% by mass, may be 0.6 to 2.2% by mass, or may be 0.6 to 2.1% by mass, based on 100% by mass of the primer composition. The content of the (A-1) may be 0.8 to 2.5% by mass, may be 0.8 to 2.2% by mass, or may be 0.8 to 2.1% by mass, based on 100% by mass of the primer composition. The content of the (A-1) may be 0.6 to 1.5% by mass, may be 0.7 to 1.5% by mass, may be 0.8 to 1.5% by mass, or may be 0.9 to 1.5% by mass, based on 100% by mass of the primer composition. The content of the (A-1) may be 1 to 2.5% by mass or may be 1.5 to 2.5% by mass, based on 100% by mass of the primer composition. The content of the (A-1) may be 1 to 2.2% by mass or may be 1.5 to 2.1% by mass, based on 100% by mass of the primer composition. When the content of the (A-1) is 0.1 to 25% by mass based on 100% by mass of the primer composition, the effect of accelerating curing of an anaerobically curable adhesive without increasing coefficient of friction is more enhanced. In a case where two or more of such components (A-1) are used in combination, the amount of the (A-1) represents the total amount of such components.

The content of the (A-2) is not particularly limited, and is preferably 1 to 25% by mass, more preferably 3 to 25% by mass, further preferably 5 to 20% by mass, further preferably 5 to 15% by mass, based on 100% by mass of the primer composition (based on the total mass of the primer composition). The content of the (A-2) may be 7 to 25% by mass, may be 7 to 20% by mass, may be 7 to 15% by mass, or may be 7% by mass or more and less than 14% by mass, based on 100% by mass of the primer composition. The content of the (A-2) may be 10 to 25% by mass, may be 10 to 20% by mass, may be 10 to 15% by mass, or may be 10% by mass or more and less than 14% by mass, based on 100% by mass of the primer composition. The content of the (A-2) may be 5 to 25% by mass, may be 10 to 25% by mass, may be 15 to 25% by mass, or may be 20 to 25% by mass, based on 100% by mass of the primer composition. When the content of the (A-2) is 1 to 25% by mass based on 100% by mass of the primer composition, the effect of accelerating curing of an anaerobically curable adhesive without increasing coefficient of friction is more enhanced. In a case where two or more of such components (A-2) are used in combination, the amount of the (A-2) represents the total amount of such components.

The content of the component (A) (the content of the entire component (A)) is 35 parts by mass or less of the component (A) based on 100 parts by mass of a component (B) described below. In other words, the content of the entire component (A) is more than 0 parts by mass and 3 5 parts by mass or less based on 100 parts by mass of the component (B). The content of the component (A) (the content of the entire component (A)) is more preferably 25 parts by mass or less, further preferably 20 parts by mass or less (lower limit: more than 0 parts by mass), based on 100 parts by mass of the component (B). When the content of the component (A) is 35 parts by mass or less based on 100 parts by mass of the component (B), there is no risk of increasing coefficient of friction of the primer composition. The lower limit value of the content of the component (A) is not particularly limited. The content of the component (A) (the content of the entire component (A)) is preferably 0.1 parts by mass or more, more preferably 1 part by mass or more, further preferably 5 parts by mass or more, based on 100 parts by mass of the component (B). When the content of the component (A) is 0.1 parts by mass or more based on 100 parts by mass of the component (B), curing of an anaerobically curable adhesive can be more accelerated. The component (A) may be contained in an amount of 0.1 to 35 parts by mass based on 100 parts by mass of the component (B), the component (A) may be contained in an amount of 1 to 25 parts by mass based on 100 parts by mass of the component (B), or the component (A) may be contained in an amount of 5 to 20 parts by mass based on 100 parts by mass of the component (B). The component (A) may be contained in an amount of 1 to 35 parts by mass based on 100 parts by mass of the component (B), the component (A) may be contained in an amount of 5 to 35 parts by mass based on 100 parts by mass of the component (B), or the component (A) may be contained in an amount of 15 to 35 parts by mass based on 100 parts by mass of the component (B). The component (A) may be contained in an amount of 10 to 25 parts by mass based on 100 parts by mass of the component (B), the component (A) may be contained in an amount of 10 to 20 parts by mass based on 100 parts by mass of the component (B), the component (A) may be contained in an amount of 10 parts by mass or more and less than 20 parts by mass based on 100 parts by mass of the component (B), or the component (A) may be contained in an amount of 10 to 18 parts by mass based on 100 parts by mass of the component (B). The component (A) may be contained in an amount of 15 to 25 parts by mass based on 100 parts by mass of the component (B), the component (A) may be contained in an amount of 15 to 20 parts by mass based on 100 parts by mass of the component (B), the component (A) may be contained in an amount of 15 parts by mass or more and less than 20 parts by mass based on 100 parts by mass of the component (B), or the component (A) may be contained in an amount of 15 to 18 parts by mass based on 100 parts by mass of the component (B). In a case where two or more of such components (A) are used in combination, the amount of the component (A) represents the total amount of such components. In a case where two or more of such components (B) are used in combination, the amount of the component (B) represents the total amount of such components.

The content of the component (A) (the content of the entire component (A)) is not particularly limited. The component (A) is preferably contained in an amount of 0.1 to 26% by mass based on 100% by mass of the primer composition (based on the total mass of the primer composition), the component (A) is more preferably contained in an amount of 1 to 25% by mass based on 100% by mass of the primer composition, the component (A) is further preferably contained in an amount of 3 to 20% by mass based on 100% by mass of the primer composition, and the component (A) is further preferably contained in an amount of 5 to 17% by mass based on 100% by mass of the primer composition. The content of the component (A) may be 7 to 26% by mass, may be 7 to 25% by mass, may be 7 to 20% by mass, or may be 7 to 17% by mass, based on 100% by mass of the primer composition. The content of the component (A) may be 9 to 26% by mass, may be 10 to 26% by mass, may be 10 to 25% by mass, may be 10 to 20% by mass, or may be 10 to 17% by mass, based on 100% by mass of the primer composition. The content of the component (A) may be 12 to 26% by mass, may be 12 to 25% by mass, may be 12 to 20% by mass, or may be 12 to 17% by mass, based on 100% by mass of the primer composition. In a case where two or more of such components (A) are used in combination, the amount of the component (A) represents the total amount of such components.

### [Component (B)]

The component (B) is a lubricating oil. A primer composition according to one embodiment preferably contains a lubricating oil as the component (B). The component (B) is preferably used in an application for prevention of baking during processing of a metal or the like. The above-mentioned component (A) does not considerably increase the coefficient of friction of the component (B), and thus the primer composition according to the present aspect can be used to stably perform processing of a metal or the like. When a primer composition according to one embodiment contains a component (A-2), the component (A-2) is preferably a component except for the component (B). The component (B) optionally does not contain a ketone-based solvent. The component (B) optionally does not contain acetone. The component (B) optionally does not contain a ketone-based solvent and optionally does not contain an alcohol-based solvent. The component (B) optionally does not contain a solvent having a boiling point of less than 80°C.

Examples of the component (B): lubricating oil include a mineral oil-based lubricating oil and a chemical synthesis oil, but the component (B): lubricating oil is not limited thereto. Examples of the mineral oil-based lubricating oil include, but are not particularly limited to, a hydrogenated petroleum fraction. The component (B): lubricating oil may be used singly or in combinations of two or more kinds thereof.

The type of the component (B) is not particularly limited, and a press working oil is preferred. The press working oil is one in which a base oil is mixed with one, or two or more additives such as an ashless dispersant, an antioxidant, a metal discoloration inhibitor, an extreme-pressure agent, a friction modifier, a viscosity index improver and/or a defoamer. Examples of the base oil include, but are not particularly limited to, a hydrogenated petroleum fraction usable as the lubricating oil (oil functionable as a common lubricating oil even if used singly). The press working oil is preferably one containing 50% by mass or more (50% by mass or more based on 100% by mass of the press working oil (based on the total mass of the press working oil)) of the hydrogenated petroleum fraction. The upper limit of the content of the above hydrogenated petroleum fraction in the press working oil is less than 100% by mass based on the total mass of the press working oil. The press working oil may be used singly or in combinations of two or more kinds thereof. In one embodiment, the component (B): lubricating oil preferably contains the press working oil, and is more preferably the press working oil.

The component (B): lubricating oil used here may be a commercially available product, may be a synthesis product, or may be a combination of such products. Examples of the commercially available product include, but are not particularly limited to, G-6338F manufactured by Nihon Kohsakuyu Co., Ltd.

The content of the component (B) is not particularly limited. The content of the component (B) is preferably 72 to 95% by mass, more preferably 75 to 95% by mass, further preferably 80 to 95% by mass, further preferably 82 to 93% by mass, based on the total mass of the primer composition (based on 100% by mass of the primer composition). The content of the component (B) may be 72% by mass or more and less than 90% by mass or may be 72 to 88% by mass, based on 100% by mass of the primer composition. The content of the component (B) may be 82% by mass or more and less than 90% by mass or may be 82 to 88% by mass, based on 100% by mass of the primer composition. When the content of the component (B) is 72 to 95% by mass based on 100% by mass of the primer composition, the possibility of increasing the coefficient of friction of the primer composition becomes smaller. In a case where two or more of such components (B) are used in combination, the amount of the component (B) represents the total amount of such components.

### [Other components in primer composition]

A primer composition according to one embodiment may further contain or may not contain one, or two or more other components. Such other components in a primer composition according to one embodiment are not particularly limited as long as these are components except for the component (A) and except for the component (B). As described above, it is preferable that a primer composition according to one embodiment does not contain a curing component. Examples of the curing component include, but are not particularly limited to, a reactive resin.

### [Anaerobically curable adhesive]

A primer composition according to one embodiment is preferably used for the purpose of accelerating curing of an anaerobically curable adhesive. The anaerobically curable adhesive is not particularly limited, and preferably contains a compound having one or more (meth)acryloyl groups, which is a component (C), an organic peroxide which is a component (D), and an anaerobically curable catalyst which is a component (E).

### <<Component (C)>>

The component (C) is a compound having one or more (meth)acryloyl groups. The component (C) may be used singly or in combinations of two or more kinds thereof.

The component (C) may be a polymer having one or more (meth)acryloyl groups in one molecule, may be a monomer having one or more (meth)acryloyl groups in one molecule, or may be a combination thereof. The polymer may contain a moiety in which monomer units are repeated, a moiety derived therefrom, or both thereof. Examples of the component (C) include, but are not particularly limited to, an oligomer having one or more (meth)acryloyl groups in one molecule and a monomer having one or more (meth)acryloyl groups in one molecule. Here, an oligomer refers to a polymer in which about two to several tens (for example, 2 to 10, 2 to 20, 2 to 30, 2 to 40, or 2 to 50) of monomer units (encompassing any other monomer unit than a (meth)acrylate monomer) are repeated. The oligomer may be a polymer containing a moiety in which about 2 to several tens of such monomer units are repeated, a moiety derived therefrom, or both thereof.

The component (C): compound having one or more (meth)acryloyl groups preferably contains an oligomer having one or more (meth)acryloyl groups in one molecule, more preferably contains an oligomer having one or more (meth)acryloyl groups in one molecule and a monomer having one or more (meth)acryloyl groups in one molecule. The mass ratio of the oligomer having one or more (meth)acryloyl groups in one molecule and the monomer having one or more (meth)acryloyl groups in one molecule in the component (C) is not particularly limited, preferably satisfies oligomer having one or more (meth)acryloyl groups in one molecule : monomer having one or more (meth)acryloyl groups in one molecule = 1:99 to 99:1, more preferably satisfies oligomer having one or more (meth)acryloyl groups in one molecule : monomer having one or more (meth)acryloyl groups in one molecule = 20:80 to 80:20, and further preferably satisfies oligomer having one or more (meth)acryloyl groups in one molecule : monomer having one or more (meth)acryloyl groups in one molecule = 50:50 to 75:25.

Examples of the type of the oligomer having one or more (meth)acryloyl groups in one molecule include, but are not particularly limited to, a urethane-modified (meth)acrylate, an epoxy-modified (meth)acrylate, and a (meth)acrylate having an aromatic ring.

The component (C): compound having one or more (meth)acryloyl groups preferably contains one or more compounds selected from the group consisting of a urethane-modified (meth)acrylate, an epoxy-modified (meth)acrylate, and a (meth)acrylate having an aromatic ring, more preferably contains a urethane-modified (meth)acrylate and/or an epoxy-modified (meth)acrylate, further preferably contains a urethane-modified (meth)acrylate and an epoxy-modified (meth)acrylate, from the viewpoint of adhesion strength to a laminated steel plate. In one embodiment, the anaerobically curable adhesive preferably contains one or more compounds selected from the group consisting of a urethane-modified (meth)acrylate, an epoxy-modified (meth)acrylate, and a (meth)acrylate having an aromatic ring.

The component (C): compound having one or more (meth)acryloyl groups preferably contains a compound having two or more (meth)acryloyl groups, more preferably contains an oligomer having two or more (meth)acryloyl groups in one molecule, from the viewpoints of curability and adhesion strength to a laminated steel plate. Examples of the type of the oligomer having two or more (meth)acryloyl groups include, but are not particularly limited to, a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring.

The component (C): compound having one or more (meth)acryloyl groups preferably contains one or more compounds selected from the group consisting of a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring, from the viewpoints of curability and adhesion strength to a laminated steel plate. The component (C): compound having one or more (meth)acryloyl groups more preferably contains a urethane-modified (meth)acrylate having two or more (meth)acryloyl groups and/or an epoxy-modified (meth)acrylate having two or more (meth)acryloyl groups, further preferably contains a urethane-modified (meth)acrylate having two or more (meth)acryloyl groups and an epoxy-modified (meth)acrylate having two or more (meth)acryloyl groups.

In one embodiment, the oligomer having one or more (meth)acryloyl groups in one molecule preferably contains one or more compounds selected from the group consisting of a urethane-modified (meth)acrylate, an epoxy-modified (meth)acrylate, and a (meth)acrylate having an aromatic ring, more preferably contains a urethane-modified (meth)acrylate and/or an epoxy-modified (meth)acrylate, further preferably contains a urethane-modified (meth)acrylate and an epoxy-modified (meth)acrylate. In one embodiment, the oligomer having one or more (meth)acryloyl groups in one molecule is preferably one or more compounds selected from the group consisting of a urethane-modified (meth)acrylate, an epoxy-modified (meth)acrylate, and a (meth)acrylate having an aromatic ring, more preferably a urethane-modified (meth)acrylate and/or an epoxy-modified (meth)acrylate, further preferably a urethane-modified (meth)acrylate and an epoxy-modified (meth)acrylate.

In a case where two or more kinds of compounds having one or more (meth)acryloyl groups are used in combination as the component (C), the content of the urethane-modified (meth)acrylate is not particularly limited, and is preferably 1 to 90% by mass, more preferably 5 to 90% by mass, further preferably 10 to 80% by mass, particularly preferably 15 to 70% by mass, based on the entire component (C) (the total mass of the component (C)). When 1 to 90% by mass of the urethane-modified (meth)acrylate is contained based on the entire component (C) (the total mass of the component (C)), adhesion strength to a laminated steel plate is superior.

In a case where two or more kinds of the compounds having one or more (meth)acryloyl groups are used in combination as the component (C), the content of the epoxy-modified (meth)acrylate is not particularly limited, and is preferably 1 to 90% by mass, more preferably 5 to 70% by mass, further preferably 10 to 50% by mass, particularly preferably 10 to 30% by mass, based on the entire component (C) (the total mass of the component (C)). When 1 to 90% by mass of the epoxy-modified (meth)acrylate is contained based on the entire component (C) (the total mass of the component (C)), curability is superior.

In a case where the urethane-modified (meth)acrylate and the epoxy-modified (meth)acrylate are used in combination (a case where the component (C): compound having one or more (meth)acryloyl groups contains the urethane-modified (meth)acrylate and the epoxy-modified (meth)acrylate), the mass ratio of the urethane-modified (meth)acrylate and the epoxy-modified (meth)acrylate is not particularly limited. The mass ratio of the urethane-modified (meth)acrylate and the epoxy-modified (meth)acrylate preferably satisfies urethane-modified (meth)acrylate : epoxy-modified (meth)acrylate = 90:10 to 10:90, more preferably satisfies urethane-modified (meth)acrylate : epoxy-modified (meth)acrylate = 85:15 to 30:70, further preferably satisfies urethane-modified (meth)acrylate : epoxy-modified (meth)acrylate = 80:20 to 50:50. When a mass ratio of urethane-modified (meth)acrylate : epoxy-modified (meth)acrylate = 90:10 to 10:90 is satisfied, curability and adhesion strength to a laminated steel plate are superior.

The urethane-modified (meth)acrylate is a compound having a urethane bond formed by the reaction of an isocyanate group and a hydroxyl group, in a main chain, and having a (meth)acryloyl group. This (meth)acryloyl group is preferably located at an end of a molecular chain, from the viewpoint of curability. Examples of the method for producing the urethane-modified (meth)acrylate include, but are not particularly limited to, a method including reacting a polyol compound having a hydroxyl group and a (meth)acrylate having an isocyanate group, and a method including reacting a polyol compound having a hydroxyl group, a polyisocyanate compound and a (meth)acrylate having a hydroxyl group. In one embodiment, the urethane-modified (meth)acrylate preferably has a polyether backbone. The urethane-modified (meth)acrylate may be used singly or in combinations of two or more kinds thereof.

Examples of the polyol compound having a hydroxyl group used in the method for producing the urethane-modified (meth)acrylate include, but are not particularly limited to, polyester polyol, polycarbonate polyol, and polyether polyol. These may be used singly or in combinations of two or more kinds thereof.

Examples of the (meth)acrylate having an isocyanate group in the method for producing the urethane-modified (meth)acrylate include, but are not particularly limited to, 2-methacryloyloxyethyl isocyanate (another name: 2-isocyanatoethyl methacrylate) and 2-isocyanatoethyl acrylate. These may be used singly or in combinations of two or more kinds thereof.

Examples of the polyisocyanate compound used in the method for producing the urethane-modified (meth)acrylate include, but are not particularly limited to, aromatic polyisocyanate, alicyclic polyisocyanate, and linear or branched aliphatic polyisocyanate. Examples of the aromatic polyisocyanate include, but are not particularly limited to, 2,4-tolylene diisocyanate, 2,6-tolylene diisocyanate, 1,3-xylylene diisocyanate, 1,4-xylylene diisocyanate, tetramethylxylylene diisocyanate, diphenylmethane diisocyanate, naphthalene-1,5-diisocyanate, and triphenylmethane triisocyanate. Examples of the alicyclic polyisocyanate include, but are not particularly limited to, isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, and bicycloheptane triisocyanate. Examples of the linear or branched aliphatic polyisocyanate include, but are not particularly limited to, hexamethylene diisocyanate, 1,3,6-hexamethylene triisocyanate, and 1,6,11-undeca triisocyanate. These may be used singly or in combinations of two or more kinds thereof.

Examples of the (meth)acrylate having a hydroxyl group in the method for producing the urethane-modified (meth)acrylate include, but are not particularly limited to, 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, (poly)propylene glycol mono(meth)acrylate, and pentaerythritol tri(meth)acrylate. These may be used singly or in combinations of two or more kinds thereof.

The epoxy-modified (meth)acrylate may be a compound that can be synthesized by ring-opening polymerization of acrylic acid or the like with a glycidyl group of a glycidyl ether compound. However, the method for synthesizing the epoxy-modified (meth)acrylate is not limited to this method. Various backbones such as bisphenol A-type, bisphenol F-type, phenol novolac-type, hydrogenated bisphenol A-type, and/or hydrogenated bisphenol F-type backbones can be adopted as a main chain of glycidyl ether. These may be used singly or in combinations of two or more kinds thereof. In one embodiment, the epoxy-modified (meth)acrylate preferably has a bisphenol A-type backbone. Specific examples of the epoxy-modified (meth)acrylate include, but are not particularly limited to, bisphenol A diglycidyl ether-type epoxy diacrylate (for example, Viscoat #540 manufactured by Osaka Chemical Industry Ltd.), ethoxylated bisphenol A diglycidyl ether-type epoxy dimethacrylate, fatty acid-modified epoxy (meth)acrylate, amine-modified bisphenol epoxy (meth)acrylate, novolac epoxy (meth)acrylate, and epoxidized soybean oil (meth)acrylate. These may be used singly or in combinations of two or more kinds thereof.

The (meth)acrylate having an aromatic ring is not particularly limited as long as it is a compound having one or more (meth)acryloyl groups and having an aromatic ring in its molecule. However, a compound corresponding to the urethane-modified (meth)acrylate is not addressed as the (meth)acrylate having an aromatic ring, but addressed as the urethane-modified (meth)acrylate. In other words, in a case where a compound corresponding to the urethane-modified (meth)acrylate has an aromatic ring, the compound is not addressed as the (meth)acrylate having an aromatic ring, but addressed as the urethane (meth)acrylate. A compound corresponding to the epoxy-modified (meth)acrylate is not addressed as the (meth)acrylate having an aromatic ring, but addressed as the epoxy-modified (meth)acrylate. In other words, in a case where a compound corresponding to the epoxy-modified (meth)acrylate has an aromatic ring, the compound is not addressed as the (meth)acrylate having an aromatic ring, but addressed as the epoxy-modified (meth)acrylate. Specific examples of the (meth)acrylate having an aromatic ring include, but are not particularly limited to, phenoxydiethylene glycol (meth)acrylate, phenoxytetraethylene glycol (meth)acrylate, and ethoxylated nonylphenyl (meth)acrylate (another name: nonylphenol EO-modified acrylate). These may be used singly or in combinations of two or more kinds thereof.

In one embodiment, the component (C): compound having one or more (meth)acryloyl groups preferably contains one or more compounds selected from the group consisting of a urethane-modified (meth)acrylate having two (meth)acryloyl groups at both ends, an epoxy-modified (meth)acrylate having two (meth)acryloyl groups at both ends, and a (meth)acrylate having two (meth)acryloyl group at both ends and having an aromatic ring, more preferably contains a urethane-modified (meth)acrylate having two (meth)acryloyl groups at both ends and an epoxy-modified (meth)acrylate having two (meth)acryloyl groups at both ends, further preferably contains a urethane-modified acrylate having two acryloyl groups at both ends and an epoxy-modified acrylate having two acryloyl groups at both ends, particularly preferably contains a urethane-modified acrylate having two acryloyl groups at both ends and having a polyether backbone and an epoxy-modified acrylate having two acryloyl groups at both ends and having a bisphenol A-type backbone.

The component (C): compound having one or more (meth)acryloyl groups preferably contains at least one compound selected from the group consisting of a monofunctional (meth)acrylate compound which is a compound having one (meth)acryloyl group in one molecule and a polyfunctional (meth)acrylate compound which is a compound having two or more (meth)acryloyl groups in one molecule. The component (C): compound having one or more (meth)acryloyl groups preferably contains a monomer having a (meth)acryloyl group. Examples of the monomer having a (meth)acryloyl group include a monofunctional (meth)acrylate monomer which is a monomer having one (meth)acryloyl group in one molecule and a polyfunctional (meth)acrylate monomer which is a monomer having two or more (meth)acryloyl groups in one molecule. These may be used singly or in combinations of two or more kinds thereof. The monofunctional (meth)acrylate compound may be a monofunctional (meth)acrylate monomer. The polyfunctional (meth)acrylate compound may be a polyfunctional (meth)acrylate monomer.

The component (C): compound having one or more (meth)acryloyl groups preferably contains one or more compounds selected from the group consisting of a monofunctional (meth)acrylate monomer and a polyfunctional (meth)acrylate monomer, more preferably contains a monofunctional (meth)acrylate monomer, further preferably contains a monofunctional methacrylate monomer.

An example of the monofunctional (meth)acrylate compound is not particularly limited, and may be a monofunctional (meth)acrylate compound (I) being a monofunctional (meth)acrylate compound which is not a urethane-modified (meth)acrylate, which is not an epoxy-modified (meth)acrylate, and which is not a (meth)acrylate having an aromatic ring. It is preferable that the monofunctional (meth)acrylate compound (I) does not contain a moiety in which monomer units are repeated and does not contain a moiety derived therefrom. In other words, the monofunctional (meth)acrylate compound (I) is preferably a monofunctional (meth)acrylate monomer.

Examples of the monofunctional (meth)acrylate compound (I) include, but are not particularly limited to, ethyl (meth)acrylate, n-butyl (meth)acrylate, tert-butyl (meth)acrylate, isobutyl methacrylate, 2-ethylhexyl (meth)acrylate, isodecyl (meth)acrylate, lauryl (meth)acrylate, stearyl (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, dicyclopentenyl (meth)acrylate, dicyclopentenyloxy (meth)acrylate, 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, (poly)propylene glycol mono(meth)acrylate, isobornyl (meth)acrylate, methoxydiethylene glycol mono(meth)acrylate, methoxytriethylene glycol mono(meth)acrylate, methoxytetraethylene glycol mono(meth)acrylate, methoxypentaethylene glycol mono(meth)acrylate, methoxyhexaethylene glycol mono(meth)acrylate, methoxyheptaethylene glycol mono(meth)acrylate, methoxyhectaethylene glycol mono(meth)acrylate, methoxyoctaethylene glycol mono(meth)acrylate, methoxynonaethylene glycol mono(meth)acrylate, methoxydecaethylene glycol mono(meth)acrylate, methoxytripropylene glycol mono(meth)acrylate, methoxytetrapropylene glycol mono(meth)acrylate, methoxypentapropylene glycol mono(meth)acrylate, methoxyhexapropylene glycol mono(meth)acrylate, methoxyheptapropylene glycol mono(meth)acrylate, methoxyhectapropylene glycol mono(meth)acrylate, methoxyoctapropylene glycol mono(meth)acrylate, methoxynonapropylene glycol mono(meth)acrylate, methoxydecapropylene glycol mono(meth)acrylate, methoxytributylene glycol mono(meth)acrylate, methoxytetrabutylene glycol mono(meth)acrylate, methoxypentabutylene glycol mono(meth)acrylate, methoxyhexabutylene glycol mono(meth)acrylate, methoxyheptabutylene glycol mono(meth)acrylate, methoxyhectabutylene glycol mono(meth)acrylate, methoxyoctabutylene glycol mono(meth)acrylate, methoxynonabutylene glycol mono(meth)acrylate, methoxydecabutylene glycol mono(meth)acrylate, ethoxydiethylene glycol mono(meth)acrylate, ethoxytriethylene glycol mono(meth)acrylate, ethoxytetraethylene glycol mono(meth)acrylate, ethoxypentaethylene glycol mono(meth)acrylate, ethoxyhexaethylene glycol mono(meth)acrylate, ethoxyheptaethylene glycol mono(meth)acrylate, ethoxyhectaethylene glycol mono(meth)acrylate, ethoxyoctaethylene glycol mono(meth)acrylate, ethoxynonaethylene glycol mono(meth)acrylate, ethoxydecaethylene glycol mono(meth)acrylate, ethoxytripropylene glycol mono(meth)acrylate, ethoxytetrapropylene glycol mono(meth)acrylate, ethoxypentapropylene glycol mono(meth)acrylate, ethoxyhexapropylene glycol mono(meth)acrylate, ethoxyheptapropylene glycol mono(meth)acrylate, ethoxyhectapropylene glycol mono(meth)acrylate, ethoxyoctapropylene glycol mono(meth)acrylate, ethoxynonapropylene glycol mono(meth)acrylate, ethoxydecapropylene glycol mono(meth)acrylate, ethoxytributylene glycol mono(meth)acrylate, ethoxytetrabutylene glycol mono(meth)acrylate, ethoxypentabutylene glycol mono(meth)acrylate, ethoxyhexabutylene glycol mono(meth)acrylate, ethoxyheptabutylene glycol mono(meth)acrylate, ethoxyhectabutylene glycol mono(meth)acrylate, ethoxyoctabutylene glycol mono(meth)acrylate, ethoxynonabutylene glycol mono(meth)acrylate, and ethoxydecabutylene glycol mono(meth)acrylate. These can be used singly or in combinations of two or more kinds thereof. In particular, preferred examples of the monofunctional (meth)acrylate monomer include 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, ethylene glycol mono(meth)acrylate, and propylene glycol mono(meth)acrylate. These can be used singly or in combinations of two or more kinds thereof.

The monofunctional (meth)acrylate compound may be a monofunctional (meth)acrylate monomer having an aromatic ring. Examples of the monofunctional (meth)acrylate monomer having an aromatic ring include, but are not particularly limited to, 2-hydroxy-3-phenoxypropyl acrylate, benzyl (meth)acrylate, phenyl (meth)acrylate, and phenoxyethyl (meth)acrylate. A monomer having a monofunctional (meth)acryloyl group can be used singly or as a mixture of two or more kinds thereof.

The monofunctional (meth)acrylate compound can be used singly or as a mixture of two or more kinds thereof.

In one embodiment, the component (C): compound having one or more (meth)acryloyl groups preferably contains a monofunctional (meth)acrylate compound, more preferably contains the monofunctional (meth)acrylate compound (I), further preferably contains at least one compound selected from the group consisting of the above-exemplified monofunctional (meth)acrylate compounds (I).

In one embodiment, the component (C): compound having one or more (meth)acryloyl groups preferably contains a monofunctional (meth)acrylate monomer, more preferably contains a monofunctional (meth)acrylate monomer which is the monofunctional (meth)acrylate compound (I).

In one embodiment, the component (C): compound having one or more (meth)acryloyl groups preferably contains a monofunctional (meth)acrylate monomer having a hydroxyl group, more preferably contains a monofunctional (meth)acrylate monomer having a hydroxyl group, which is the monofunctional (meth)acrylate compound (I).

In one embodiment, the component (C): compound having one or more (meth)acryloyl groups further preferably contains 2-hydroxyethyl (meth)acrylate, particularly preferably contains 2-hydroxyethyl methacrylate.

In one embodiment, the monofunctional (meth)acrylate compound may be a monomer having a monofunctional (meth)acryloyl group, may be a monomer having a monofunctional (meth)acryloyl group and having a hydroxyl group, may be a monomer having a monofunctional (meth)acryloyl group and having a hydroxyl group, which is the monofunctional (meth)acrylate compound (I), may be 2-hydroxyethyl (meth)acrylate, or may be 2-hydroxyethyl methacrylate.

The polyfunctional (meth)acrylate compound is not particularly limited, and may be a polyfunctional (meth)acrylate compound (II) being a polyfunctional (meth)acrylate compound which is not a urethane-modified (meth)acrylate, which is not an epoxy-modified (meth)acrylate, and which is not a (meth)acrylate having an aromatic ring. The polyfunctional (meth)acrylate compound may be a combination of at least one compound selected from the group consisting of a urethane-modified (meth)acrylate, an epoxy-modified (meth)acrylate and a(meth)acrylate having an aromatic ring, with the polyfunctional (meth)acrylate compound (II). It is preferable that the polyfunctional (meth)acrylate compound (II) does not contain a moiety in which monomer units are repeated and does not contain a moiety derived therefrom. In other words, the polyfunctional (meth)acrylate compound (II) is preferably a polyfunctional (meth)acrylate monomer. Examples of the polyfunctional (meth)acrylate compound include, but are not particularly limited to, a difunctional (meth)acrylate compound, a trifunctional (meth)acrylate compound, a tetrafunctional (meth)acrylate compound, a pentafunctional (meth)acrylate compound, and a hexafunctional (meth)acrylate compound. Examples of the polyfunctional (meth)acrylate monomer include, but are not particularly limited to, a difunctional (meth)acrylate monomer, a trifunctional (meth)acrylate monomer, a tetrafunctional (meth)acrylate monomer, a pentafunctional (meth)acrylate monomer, and a hexafunctional (meth)acrylate monomer. Preferred examples of the polyfunctional (meth)acrylate compound also include, as described above, a urethane-modified (meth)acrylate having two or more (meth)acryloyl groups, an epoxy-modified (meth)acrylate having two or more (meth)acryloyl groups, and a (meth)acrylate having two or more (meth)acryloyl groups and having an aromatic ring.

The polyfunctional (meth)acrylate compound (II) is not particularly limited. Examples of the difunctional (meth)acrylate compound which is the polyfunctional (meth)acrylate compound (II) include, but are not particularly limited to, ethylene glycol di(meth)acrylate, polyethylene glycol di(meth)acrylate, propylene glycol di(meth)acrylate, polypropylene glycol di(meth)acrylate, dimethylol-tricyclodecane di(meth)acrylate, tricyclodecanol di(meth)acrylate, 1,6-hexanediol di(meth)acrylate, 1,9-nonanediol di(meth)acrylate, 1,10-decanediol di(meth)acrylate, neopentyl glycol di(meth)acrylate, and 2-hydroxy-3-methacryl propyl acrylate. Preferred examples of the difunctional (meth)acrylate monomer which is the polyfunctional (meth)acrylate compound (II) include, but are not particularly limited to, ethylene glycol di(meth)acrylate, propylene glycol di(meth)acrylate, tricyclodecanol di(meth)acrylate, 1,6-hexanediol di(meth)acrylate, 1,9-nonanediol di(meth)acrylate, 1,10-decanediol di(meth)acrylate, neopentyl glycol di(meth)acrylate, and 2-hydroxy-3-methacryl propyl acrylate. Examples of the trifunctional (meth)acrylate monomer which is the polyfunctional (meth)acrylate compound (II) include, but are not particularly limited to, trimethylolpropane trimethacrylate. Examples of the tetrafunctional (meth)acrylate compound which is the polyfunctional (meth)acrylate compound (II) include, but are not particularly limited to, ditrimethylolpropane tetra(meth)acrylate and pentaerythritol tetra(meth)acrylate. Preferred examples of the tetrafunctional (meth)acrylate monomer include, but are not particularly limited to, pentaerythritol tetra(meth)acrylate. Examples of the pentafunctional (meth)acrylate compound which is the polyfunctional (meth)acrylate compound (II) include, but are not particularly limited to, dipentaerythritol monohydroxy penta(meth)acrylate and an alkyl-modified dipentaerythritol penta(meth)acrylate. Examples of the hexafunctional (meth)acrylate compound which is the polyfunctional (meth)acrylate compound (II) include, but are not particularly limited to, dipentaerythritol hexa(meth)acrylate. The polyfunctional (meth)acrylate compound can be used singly or as a mixture of two or more kinds thereof.

The polyfunctional (meth)acrylate compound preferably contains at least one compound selected from the group consisting of the above-exemplified compounds. The polyfunctional (meth)acrylate compound may be at least one compound selected from the group consisting of the above-exemplified compounds.

The mass ratio of the polyfunctional (meth)acrylate compound and the monofunctional (meth)acrylate compound in the component (C) is not particularly limited, and preferably satisfies polyfunctional (meth)acrylate compound : monofunctional (meth)acrylate compound = 1:99 to 99:1, more preferably satisfies polyfunctional (meth)acrylate compound : monofunctional (meth)acrylate compound = 20:80 to 80:20, further preferably satisfies polyfunctional (meth)acrylate compound : monofunctional (meth)acrylate compound = 50:50 to 75:25.

The compound having one or more (meth)acryloyl groups may be used singly or in combinations of two or more kinds thereof. The component (C): compound having one or more (meth)acryloyl groups preferably contains at least one compound selected from the group consisting of the above-described compounds. The component (C): compound having one or more (meth)acryloyl groups more preferably contains, for example, a urethane-modified (meth)acrylate having two or more (meth)acryloyl groups, an epoxy-modified (meth)acrylate having two or more (meth)acryloyl groups and a monofunctional (meth)acrylate compound (I). Here, respective preferred examples of the urethane-modified (meth)acrylate having two or more (meth)acryloyl groups, the epoxy-modified (meth)acrylate having two or more (meth)acryloyl groups and the monofunctional (meth)acrylate compound (I) are as described above.

In one embodiment, examples of the component (C): compound having one or more (meth)acryloyl groups may be a urethane-modified (meth)acrylate having two or more (meth)acryloyl groups, an epoxy-modified (meth)acrylate having two or more (meth)acryloyl groups and a monofunctional (meth)acrylate compound (I), may be a urethane-modified (meth)acrylate having two or more (meth)acryloyl groups, an epoxy-modified (meth)acrylate having two or more (meth)acryloyl groups and a monofunctional (meth)acrylate monomer which is a monofunctional (meth)acrylate compound (I), may be a urethane-modified (meth)acrylate having two (meth)acryloyl groups at both ends, an epoxy-modified (meth)acrylate having two (meth)acryloyl groups at both ends and a monofunctional (meth)acrylate monomer which is a monofunctional (meth)acrylate compound (I), or may be a urethane-modified (meth)acrylate having two (meth)acryloyl groups at both ends, an epoxy-modified (meth)acrylate having two (meth)acryloyl groups at both ends and a monofunctional (meth)acrylate monomer having a hydroxyl group, which is a monofunctional (meth)acrylate compound (I).

In one embodiment, examples of the component (C): compound having one or more (meth)acryloyl groups may be a urethane-modified (meth)acrylate having two (meth)acryloyl groups at both ends, an epoxy-modified (meth)acrylate having two (meth)acryloyl groups at both ends, and 2-hydroxyethyl (meth)acrylate, or may be a urethane-modified acrylate having two acryloyl groups at both ends, an epoxy-modified acrylate having two acryloyl groups at both ends, and 2-hydroxyethyl methacrylate.

In one embodiment, examples of the component (C): compound having one or more (meth)acryloyl groups may be a urethane-modified (meth)acrylate having two (meth)acryloyl groups at both ends and having a polyether backbone, an epoxy-modified (meth)acrylate having two (meth)acryloyl groups at both ends and having a bisphenol A-type backbone, and 2-hydroxyethyl (meth)acrylate, or may be a urethane-modified acrylate having two acryloyl groups at both ends and having a polyether backbone, an epoxy-modified acrylate having two acryloyl groups at both ends and having a bisphenol A-type backbone, and 2-hydroxyethyl methacrylate.

The content of the component (C) in the anaerobically curable adhesive is not particularly limited. The content of the component (C) is preferably 50% by mass or more and less than 100% by mass, more preferably 60% by mass or more and less than 100% by mass, further preferably 70% by mass or more and less than 100% by mass, further preferably 90% by mass or more and less than 100% by mass, particularly preferably 95% by mass or more and less than 100% by mass, based on 100% by mass of the anaerobically curable adhesive (based on the total mass of the anaerobically curable adhesive). The content of the component (C) may be 60 to 99% by mass or may be 70 to 99% by mass, based on 100% by mass of the anaerobically curable adhesive (based on the total mass of the anaerobically curable adhesive). In a case where two or more of such components (C) are used in combination, the amount of the component (C) represents the total amount of such components.

### <<Component (D)>>

The component (D) is an organic peroxide. The component (D) is used in an application for curing the component (C). Examples of the component (D) include, but are not particularly limited to, a hydroperoxide compound, a ketone peroxide compound, a diallyl peroxide compound, and a peroxyester compound. These may be used singly or in combinations of two or more kinds thereof. Specific examples of the component (D) include, but are not particularly limited to, cumene hydroperoxide, t-butyl hydroperoxide, p-menthane hydroperoxide, methyl ethyl ketone peroxide, cyclohexane peroxide, dicumyl peroxide, and diisopropylbenzene hydroperoxide. These may be used singly or in combinations of two or more kinds thereof. In particular, a hydroperoxide compound is preferably used and cumene hydroperoxide is more preferably used from the viewpoints of excellent anaerobic curability and storage stability of the adhesive. The organic peroxide may be used singly or in combinations of two or more kinds thereof. The component (D): organic peroxide preferably contains at least one compound selected from the group consisting of the above-exemplified compounds. In one embodiment, the component (D): organic peroxide is preferably at least one compound selected from the group consisting of a hydroperoxide compound, a ketone peroxide compound, a diallyl peroxide compound and a peroxyester compound, more preferably at least one compound selected from the group consisting of cumene hydroperoxide, t-butyl hydroperoxide, p-menthane hydroperoxide, methyl ethyl ketone peroxide, cyclohexane peroxide, dicumyl peroxide and diisopropylbenzene hydroperoxide, further preferably cumene hydroperoxide. In one embodiment, the component (D): organic peroxide may be, for example, a hydroperoxide compound.

The content of the component (D) in the anaerobically curable adhesive is not particularly limited. The content of the component (D) is preferably 0.1 to 30 parts by mass, more preferably 0.3 to 15 parts by mass, further preferably 0.5 to 10 parts by mass, based on 100 parts by mass of the component (C). When the content of the component (D) is 0.1 to 30 parts by mass based on 100 parts by mass of the component (C), both of curability and storage stability can be achieved. The content of the component (D) may be 0.1 to 20 parts by mass, may be 0.3 to 10 parts by mass, or may be 0.5 to 5 parts by mass, based on 100 parts by mass of the component (C). In a case where two or more of such components (C) are used in combination, the amount of the component (C) represents the total amount of such components. In a case where two or more of such components (D) are used in combination, the amount of the component (D) represents the total amount of such components.

The content of the component (D) in the anaerobically curable adhesive is not particularly limited. The content of the component (D) is preferably 1 to 300 parts by mass, more preferably 3 to 150 parts by mass, further preferably 5 to 100 parts by mass, based on 100 parts by mass of the component (E). In a case where two or more of such components (D) are used in combination, the amount of the component (D) represents the total amount of such components. In a case where two or more of such components (E) are used in combination, the amount of the component (E) represents the total amount of such components.

### <<Component (E)>>

The component (E) is an anaerobically curable catalyst. The component (E) accelerates curing by decomposition of the component (D) and thus generation of free radicals in an anaerobic state where there is no contact with oxygen. Examples of the component (E) include, but are not particularly limited to, saccharin, an amine compound, an azole compound, a mercaptan compound, a hydrazine compound, and any derivative thereof. These can be used singly or in combinations of a plurality thereof. Herein, saccharin is addressed as one not included in the azole compound. The component (C): anaerobically curable catalyst preferably contains at least one compound selected from the group consisting of the above-exemplified compounds. In particular, the component (C): anaerobically curable catalyst preferably contains one or more compounds selected from the group consisting of saccharin, an azole compound, a mercaptan compound and a hydrazine compound, more preferably contains at least one compound selected from the group consisting of saccharin and a hydrazine compound, further preferably contains saccharin, particularly preferably contains a combination of saccharin and a hydrazine compound, from the viewpoint of being excellent in curability. In one embodiment, it is preferable that a compound corresponding to the component (A): curing accelerator of anaerobically curable adhesive is not addressed as the component (E). In other words, in one embodiment, the component (E) is preferably a compound other than the compound contained in the component (A): curing accelerator of anaerobically curable adhesive.

Examples of the amine compound include, but are not particularly limited to, heterocyclic secondary amine, heterocyclic tertiary amine, and aromatic tertiary amine. Examples of the heterocyclic secondary amine include, but are not particularly limited to, 1,2,3,4-tetrahydroquinoline and 1,2,3,4-tetrahydroquinaldine. Examples of the heterocyclic tertiary amine include, but are not particularly limited to, quinoline, methylquinoline, quinaldine, quinoxalinephenazine. Examples of the aromatic tertiary amine include, but are not particularly limited to, N,N-dimethyl-anisidine and N,N-dimethylaniline. These may be used singly or in combinations of two or more kinds thereof.

Examples of the azole compound include, but are not particularly limited to, thiazole, isothiazole, thiadiazole, oxazole, isoxazole, oxadiazole, diazole, and triazole. Examples of the azole compound more specifically include benzothiazole, 1,2,4-triazole, benzotriazole, hydroxybenzotriazole, benzoxazole, 1,2,3-benzothiadiazole, and 3-mercaptobenzotriazole, but not limited thereto. These may be used singly or in combinations of two or more kinds thereof.

Examples of the mercaptan compound include, but are not particularly limited to, a linear mercaptan. Examples of the linear mercaptan include n-dodecyl mercaptan, ethyl mercaptan, and butyl mercaptan, but not limited thereto. These may be used singly or in combinations of two or more kinds thereof.

Examples of the hydrazine compound include 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-toluenesulfonylhydrazide, but not limited thereto. These may be used singly or in combinations of two or more kinds thereof. The hydrazine compound preferably contains at least one compound selected from the group consisting of the above-exemplified compounds. A hydrazine compound having an acetyl group is preferred and 1-acetyl-2-phenylhydrazine is more preferred from the viewpoint of being excellent in curability.

In one embodiment, the component (E): anaerobically curable catalyst preferably contains a hydrazine compound, more preferably contains at least one compound selected from the group consisting of the above-exemplified hydrazine compounds, further preferably contains 1-acetyl-2-phenylhydrazine. In one embodiment, the component (E): anaerobically curable catalyst preferably contains a hydrazine compound having an acetyl group. In one embodiment, the hydrazine compound, for example, may be a hydrazine compound having an acetyl group, or may be 1-acetyl-2-phenylhydrazine.

The anaerobically curable catalyst may be used singly or in combinations of two or more kinds thereof. The component (E): anaerobically curable catalyst preferably contains at least one compound selected from the group consisting of the above-described compounds. In one embodiment, the component (E): anaerobically curable catalyst is preferably saccharin and a hydrazine compound, more preferably saccharin and at least one compound selected from the group consisting of the above-exemplified hydrazine compounds, further preferably saccharin and 1-acetyl-2-phenylhydrazine. In one embodiment, the component (E): anaerobically curable catalyst is preferably saccharin and a hydrazine compound having an acetyl group.

The content of the component (E) in the anaerobically curable adhesive is not particularly limited. The content of the component (E) is preferably 0.01 to 40 parts by mass based on 100 parts by mass of the component (C), from the viewpoint of curability. The content of the component (E) may be 0.5 to 30 parts by mass or may be 1 to 25 parts by mass, based on 100 parts by mass of the component (C). The content of the component (E), for example, may be 0.01 to 10 parts by mass or may be 0.01 to 5 parts by mass, based on 100 parts by mass of the component (C). The content of the component (E), for example, may be 0.1 to 10 parts by mass or may be 0.1 to 5 parts by mass, based on 100 parts by mass of the component (C). The content of the component (E), for example, may be 0.5 to 10 parts by mass or may be 0.5 to 5 parts by mass, based on 100 parts by mass of the component (C). The content of the component (E), for example, may be 1 to 10 parts by mass or may be 1 to 5 parts by mass, based on 100 parts by mass of the component (C). In a case where two or more of such components (E) are used in combination, the amount of the component (E) represents the total amount of such components. In a case where two or more of such components (C) are used in combination, the amount of the component (C) represents the total amount of such components.

In a case where saccharin and a hydrazine compound are combined, namely, when the component (E): anaerobically curable catalyst contains saccharin and a hydrazine compound, the mass ratio of saccharin and the hydrazine compound in the component (E) is not particularly limited. The mass ratio of saccharin and the hydrazine compound in the component (E) preferably satisfies saccharin : hydrazine compound = 10:90 to 90:10, more preferably satisfies saccharin : hydrazine compound = 20:80 to 80:20, further preferably satisfies saccharin : hydrazine compound = 50:50 to 80:20, further preferably satisfies saccharin : hydrazine compound = 50:50 to 80:20, particularly preferably satisfies saccharin : hydrazine compound = 60:40 to 75:25. In a case where two or more of such hydrazine compounds are used in combination, the amount of the hydrazine compound represents the total amount of such hydrazine compounds.

### <<Other components in anaerobically curable adhesive>>

The anaerobically curable adhesive may further contain or may not contain one, or two or more other components. Such other components in the anaerobically curable adhesive are not particularly limited as long as these are components except for the component (C) to the component (E). The anaerobically curable adhesive may further contain a proper amount of one, or two or more additives (one, or two or more other components) such as a stabilizer, an inorganic filling agent, an organic filling agent, a silane coupling agent, a light stabilizer, a photosensitizer, a polymerization inhibitor, and/or a chelating agent as long as characteristics are not impaired. The anaerobically curable adhesive preferably further contains at least one additive selected from the group consisting of the above-exemplified additives, more preferably further contains a stabilizer.

The anaerobically curable adhesive may further contain or may not contain a stabilizer. The stabilizer may be used singly or in combinations of two or more kinds thereof. Examples of the stabilizer include, but are not particularly limited to, 2,6-di-t-butyl-p-cresol (another designation: 2,6-di-tert-butyl-p-cresol), hydroquinone, hydroquinone monomethyl ether, and 4-t-butylcatechol (another designation: 4-tert-butylcatechol). These may be used singly or in combinations of two or more kinds thereof. As the stabilizer, 2,6-di-t-butyl-p-cresol is preferably used from the viewpoint of storage stability of the adhesive. The stabilizer preferably contains at least one compound selected from the group consisting of the above-exemplified compounds. In one embodiment, the stabilizer is preferably at least one compound selected from the group consisting of the above-exemplified compounds, more preferably 2,6-di-t-butyl-p-cresol. In one embodiment, in one embodiment, the content of the stabilizer is not particularly limited, and is preferably 0.01 to 0.5% by mass, more preferably 0.02 to 0.3% by mass, further preferably 0.05 to 0.15% by mass, relative to the entire anaerobically curable adhesive (based on the total mass of the anaerobically curable adhesive; based on 100% by mass of the anaerobically curable adhesive). In a case where two or more of such stabilizers are used in combination, the amount of the stabilizer represents the total amount of such stabilizers.

The anaerobically curable adhesive may further contain or may not contain an inorganic filling agent. Examples of the inorganic filling agent include, but are not particularly limited to, glass, silica, talc, alumina, mica, ceramics, silicone particles, calcium carbonate, aluminum nitride, carbon powder, kaolin clay, dry clay mineral, and dry diatomaceous earth. These may be used singly or in combinations of two or more kinds thereof.

The anaerobically curable adhesive may further contain or may not contain an organic filling agent. An example of the organic filling agent is not particularly limited, and may be a powder form of an organic product formed from rubber, an elastomer, plastic, a polymer (homopolymer and/or copolymer), and/or the like. These may be used singly or in combinations of two or more kinds thereof. The organic filling agent may also be an organic filler having a multi-layered structure of a core-shell type or the like. The average particle size of the organic filler is not particularly limited, and is preferably in a range of 0.05 to 50 µm.

The anaerobically curable adhesive may further contain or may not contain a silane coupling agent. Examples of the silane coupling agent include, but are not particularly limited to, a glycidyl group-containing silane coupling agent, a vinyl group-containing silane coupling agent, a (meth)acryl group-containing silane coupling agent ((meth)acryloyl group-containing silane coupling agent), an amino group-containing silane coupling agent, γ-mercaptopropyltrimethoxysilane, and γ-chloropropyltrimethoxysilane. Examples of the glycidyl group-containing silane coupling agent include, but are not particularly limited to, 3-acryloxypropyltrimethoxysilane, 3-glycidoxypropylmethydimethoxysilane, 3-glycidoxypropylmethyldiethoxysilane, 3-glycidoxypropylmethyldipropyloxysilane, 3-glycidoxypropydimethylmonomethoxysilane, 3-glycidoxypropydimethylmonoethoxysilane, 3-glycidoxypropydimethylmonopropyloxysilane, 2-(3,4-epoxycyclohexyl)ethyltrimethoxysilane, 3-glycidoxypropyltriethoxysilane, 3-glycidoxypropyltrimethoxysilane, and 3-glycidoxypropylmethyldiethoxysilane. Examples of the vinyl group-containing silane coupling agent include, but are not particularly limited to, vinyl tris(β-methoxyethoxy)silane, vinyltriethoxysilane, and vinyltrimethoxysilane. Examples of the (meth)acryloyl group-containing silane coupling agent include, but are not particularly limited to, 3-methacryloxypropylmethydimethoxysilane, 3-methacryloxypropylmethyldiethoxysilane, 3-methacryloxypropydimethylmonomethoxysilane, 3-methacryloxypropydimethylmonoethoxysilane, 3-acryloxypropylmethyldipropyloxysilane, 3-acryloxypropylmethydimethoxysilane, 3-acryloxypropylmethyldiethoxysilane, 3-acryloxypropylmethyldipropyloxysilane, 3-acryloxypropydimethylmonopropyloxysilane, 3-acryloxypropydimethylmonomethoxysilane, 3-acryloxypropydimethylmonoethoxysilane, 3-acryloxypropydimethylmonopropyloxysilane, and γ-methacryloxypropyltrimethoxysilane. Examples of the amino group-containing silane coupling agent include, but are not particularly limited to, N-β-(aminoethyl)-γ-aminopropyltrimethoxysilane, γ-aminopropyltriethoxysilane, and N-phenyl-γ-aminopropyltrimethoxysilane. Herein, the (meth)acryloyl group-containing silane coupling agent is not included in the component (C). In one embodiment, it is preferable that the component (C) does not contain a compound containing a silicon (Si) atom to which a hydroxyl group and/or a hydrolyzable group are/is bound, and it is more preferable that the component (C) does not contain a compound containing a Si atom. Herein, the amino group-containing silane coupling agent is not included in the component (E), and the mercapto group-containing silane coupling agent is not included in the component (E). In one embodiment, it is preferable that the component (E) does not contain a compound containing a silicon (Si) atom to which a hydroxyl group and/or a hydrolyzable group are/is bound, and it is more preferable that the component (E) does not contain a compound containing a Si atom.

The anaerobically curable adhesive may further contain or may not contain at least one additive selected from the group consisting of a light stabilizer, a photosensitizer, a polymerization inhibitor and a chelating agent. The anaerobically curable adhesive optionally does not contain all of a light stabilizer, a photosensitizer, a polymerization inhibitor and a chelating agent.

It is preferable that the anaerobically curable adhesive does not contain any metal as a component from the viewpoint of storage stability. Herein, the "anaerobically curable adhesive not containing any metal as a component" means that a metal element is not contained in any component constituting the anaerobically curable adhesive. In one embodiment, it is preferable that the anaerobically curable adhesive does not contain any metal element. Herein, the "anaerobically curable adhesive not containing any metal element" means that the anaerobically curable adhesive contains a metal element only as an inevitable impurity, or does not contain any metal element at all.

Another aspect (second aspect) of the present invention can also be said to relate to a primer composition containing the (A-1), the (A-2) and the component (B), wherein the total amount of the (A-1) and the (A-2) is 35 parts by mass or less based on 100 parts by mass of the component (B) (preferably, the total amount of the (A-1) and the (A-2) is 0.1 to 35 parts by mass based on 100 parts by mass of the component (B)). According to the primer composition according to the present aspect (second aspect), not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced.

The total content of the (A-1) and the (A-2) in the primer composition according to the present aspect (second aspect) is more than 0 parts by mass and 35 parts by mass or less based on 100 parts by mass of the component (B). Preferred examples of the total content of the (A-1) and the (A-2) in the primer composition according to the present aspect (second aspect) include, but are not particularly limited to, more than 0 parts by mass and 25 parts by mass or less, more than 0 parts by mass and 20 parts by mass or less, 0.1 parts by mass or more, 1 part by mass or more, 5 parts by mass or more, 0.1 to 35 parts by mass, 1 to 25 parts by mass, 5 to 20 parts by mass, 1 to 35 parts by mass, 5 to 35 parts by mass, 15 to 35 parts by mass, 10 to 25 parts by mass, 10 to 20 parts by mass, 10 parts by mass or more and less than 20 parts by mass, 10 to 18 parts by mass, 15 to 25 parts by mass, 15 to 20 parts by mass, 15 parts by mass or more and less than 20 parts by mass, and 15 to 18 parts by mass, based on 100 parts by mass of the component (B). In a case where two or more of such components (A-1) are used in combination, the amount of the (A-1) represents the total amount of such components. In a case where two or more of such components (A-2) are used in combination, the amount of the (A-2) represents the total amount of such components. In a case where two or more of such components (B) are used in combination, the amount of the component (B) represents the total amount of such components.

An embodiment of the (A-1), an embodiment of the (A-2), an embodiment of the component (B), and embodiments of other components (other components in the primer composition) in the primer composition according to the present aspect (second aspect) are the same respectively as in the descriptions with respect to the primer composition according to the first aspect.

### <Method of use of primer composition>

Herein, the primer composition refers to one with which an adherend is to be coated in advance before coating with an adhesive, resulting in acceleration of curing of an anaerobically curable adhesive and enhancements in curing time and adhesion strength. The primer composition according to each of the above-described aspects may be constituted from the component (A), the component (B), and, if necessary, one, or two or more other components, and is preferably constituted from the component (A) and the component (B). The component (A) and the component (B) may be mixed immediately before coating with an anaerobically curable adhesive, or may be mixed in advance.

### <Composition kit for adhesion>

The primer composition according to the first aspect is preferably used in a composition kit for adhesion, including an anaerobically curable adhesive and the primer composition. The primer composition according to the second aspect is preferably used in a composition kit for adhesion, including an anaerobically curable adhesive and the primer composition. Accordingly, another aspect (third aspect) of the present invention can also be said to relate to a composition kit for adhesion, including an anaerobically curable adhesive and the primer composition according to the first aspect or the second aspect. According to the composition kit for adhesion according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced. In the composition kit for adhesion according to the present aspect, the primer composition and the anaerobically curable adhesive are separately present. The anaerobically curable adhesive in the composition kit for adhesion according to the present aspect is the same as in the description with respect to the primer composition according to the first aspect. A preferred embodiment of the anaerobically curable adhesive in the composition kit for adhesion according to the present aspect is also the same as in the description with respect to the primer composition according to the first aspect. The primer composition in the composition kit for adhesion according to the present aspect is the same as in the description with respect to the primer composition according to the first aspect or the primer composition according to the second aspect. A preferred embodiment of the primer composition in the composition kit for adhesion according to the present aspect is also the same as in the description with respect to the primer composition according to the first aspect or the primer composition according to the second aspect. In one embodiment, the anaerobically curable adhesive preferably contains one or more compounds selected from the group consisting of a urethane-modified (meth)acrylate, an epoxy-modified (meth)acrylate, and a (meth)acrylate having an aromatic ring.

### <Application>

The primer composition according to the first aspect, the primer composition according to the second aspect and the composition kit for adhesion according to the third aspect can be each used in, for example, fitting and/or bonding in a case where an adherend is metallic. Examples of the adherend include, but are not particularly limited to, a steel plate (for example, an electromagnetic steel plate) and a welch plug. Examples of the metal include, but are not particularly limited to, SPCC (Steel Plate Cold Commercial) (cold-rolled steel plate), and copper.

There may be usually unsuited for anaerobic curability depending on the type of metal. However, when even such a type of metal is coated with the primer composition according to the first aspect, the primer composition according to the second aspect, or the primer composition in the composition kit for adhesion according to the third aspect, and the primer composition and the anaerobically curable adhesive are used in combination, there are some cases that acceleration of curing and an enhancement in adhesion strength with the anaerobically curable adhesive can be realized.

Examples of a more specific application in which the primer composition according to the first aspect, the primer composition according to the second aspect and the composition kit for adhesion according to the third aspect are each used include, but are not particularly limited to, screwing of a sparking plug, assembling of a laminated steel plate, a lamination mold, and/or the like of a rotor (a rotor) for rotating electrical machines, and assembling of a laminated steel plate, a lamination mold, and/or the like of a solenoid. In particular, the primer composition according to the first aspect, the primer composition according to the second aspect and the composition kit for adhesion according to the third aspect can be each suitably used for assembling of a laminated steel plate.

### <Method for producing laminate with primer composition, and laminate>

The primer composition according to the first aspect, the primer composition according to the second aspect and the composition kit for adhesion according to the third aspect are each preferably used in a method for producing a laminate. Here, the method for producing a laminate preferably includes coating an adherend with the primer composition according to the first aspect or the primer composition according to the second aspect, coating the adherend, a coating film of the primer composition, or both thereof with an anaerobically curable adhesive, and bonding the adherend and an adherend being a bonding object, after coating with the primer composition and coating with the anaerobically curable adhesive, and thereafter curing the anaerobically curable adhesive. Accordingly, another aspect (fourth aspect) of the present invention can also be said to relate to a method for producing a laminate, including coating an adherend with the primer composition according to the first aspect or the primer composition according to the second aspect, coating the adherend, a coating film of the primer composition, or both thereof with an anaerobically curable adhesive, and bonding the adherend and an adherend being a bonding object, after coating with the primer composition and coating with the anaerobically curable adhesive, and thereafter curing the anaerobically curable adhesive. According to the method for producing a laminate according to the above-described aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced.

An example of the laminate is not particularly limited, and is preferably a laminate including a plurality of steel plates, more preferably a laminate including a plurality of electromagnetic steel plates. A method for producing a laminate according to one embodiment is preferably a method for producing a laminated steel plate. Here, the method for producing a laminated steel plate preferably includes coating a steel plate (preferably electromagnetic steel plate) with the primer composition according to the first aspect or the primer composition according to the second aspect, coating the adherend, a coating film of the primer composition, or both thereof with an anaerobically curable adhesive, and bonding the steel plate and a steel plate being a bonding object (preferably an electromagnetic steel plate being a bonding object) after coating with the primer composition and coating with the anaerobically curable adhesive, and thereafter curing the anaerobically curable adhesive to obtain a laminate.

The coating film of the primer composition may be partially or completely dried and/or cured. The coating film of the primer composition may be dried and/or cured, for example, to such an extent that the anaerobically curable adhesive can be laminated. Such coating with the anaerobically curable adhesive may be applied onto a surface of (namely, immediately above) the adherend (preferably steel plate, particularly preferably electromagnetic steel plate), a surface of (namely, immediately above) the coating film of the primer composition, or both thereof. The adherend (preferably steel plate, particularly preferably electromagnetic steel plate) being a bonding object may be coated with the primer composition, may be coated with the anaerobically curable adhesive, or may be coated with both thereof. When the adherend (preferably steel plate, particularly preferably electromagnetic steel plate) being a bonding object is an adherend coated with both of the primer composition and the anaerobically curable adhesive, the coating film of the primer composition and the coating film of the anaerobically curable adhesive may be present on respective different surfaces of the adherend, or may be laminated and present on the same surface of the adherend.

The primer composition according to the first aspect, the primer composition according to the second aspect and the composition kit for adhesion according to the third aspect are each particularly suitably used in a method for producing a laminated steel plate obtained by laminating a predetermined number of thin steel plates (preferably, electromagnetic thin steel plates) formed by punching a strip-shaped steel plate into a predetermined shape. The method for producing a laminate with the primer composition according to the first aspect, the primer composition according to the second aspect or the composition kit for adhesion according to the third aspect is not particularly limited. A method for producing a laminated steel plate with the primer composition according to the first aspect, the primer composition according to the second aspect or the composition kit for adhesion according to the third aspect is not particularly limited, and examples thereof include a method including the following Steps 1 to 4.
Step 1: coating a strip-shaped steel plate with the primer composition according to the first aspect or the primer composition according to the second aspect;
Step 2: punching the strip-shaped steel plate coated with the primer composition into a predetermined shape to obtain the thin steel plate coated with the primer composition;
Step 3: coating the thin steel plate coated with the primer composition, with an anaerobically curable adhesive in a planar or spot-like manner, to bond and laminate the thin steel plate and any other thin steel plate (a thin steel plate being a bonding object); and
Step 4: curing the anaerobically curable adhesive under predetermined conditions to obtain a laminated steel plate.

The thin steel plate obtained in Step 2 is a thin steel plate coated with the primer composition. In Step 3, coating with the anaerobically curable adhesive may be applied onto a surface of (namely, immediately above) the adherend, a surface of (namely, immediately above) the primer composition used for coating, or both thereof. The primer composition used for coating (the coating film of the primer composition) may be partially or completely dried and/or cured. The primer composition used for coating (the coating film of the primer composition) may be dried and/or cured, for example, to such an extent that the anaerobically curable adhesive can be laminated. In Step 3, the thin steel plate being a bonding object may be coated with the primer composition, may be coated with the anaerobically curable adhesive, or may be coated with both thereof. When the thin steel plate being a bonding object is a thin steel plate coated with both of the primer composition and the anaerobically curable adhesive, the coating film of the primer composition and the coating film of the anaerobically curable adhesive may be present on respective different surfaces of the thin steel plate, or may be laminated and present on the same surface of the thin steel plate. Step 4 is a step of curing the anaerobically curable adhesive under predetermined conditions to obtain a laminated steel plate, provided after Step 3. The curing of the anaerobically curable adhesive in Step 4 is performed in a laminate including the thin steel plate coated with the primer composition, the anaerobically curable adhesive, and the thin steel plate being a bonding object.

In a case where the primer composition according to the first aspect or the primer composition according to the second aspect contains the (A-2) in the above-described production method, a drying step is preferably inserted between Step 1 and Step 2, and/or between Step 2 and Step 3. The drying temperature in the drying step is not particularly limited, and is preferably 10 to 50°C, more preferably 15 to 40°C, further preferably 20 to 30°C. The total drying time in the drying step is not particularly limited, and is preferably 5 seconds to 5 hours, more preferably 5 seconds to 2 hours, further preferably 10 seconds to 1.5 hours.

In a method for producing a laminate according to one embodiment (preferably a method for producing a laminated steel plate), an anaerobically curable adhesive preferably contains one or more compounds selected from the group consisting of a urethane-modified (meth)acrylate, an epoxy-modified (meth)acrylate, and a (meth)acrylate having an aromatic ring.

The materials constituting two or more adherends to be bonded are not particularly limited, and at least some thereof are preferably common, particularly preferably the same.

The bonding of the adherend (preferably steel plate, particularly preferably electromagnetic steel plate) is not particularly limited, and is preferably performed, for example, so as to allow a surface of a layer of the anaerobically curable adhesive (for example, the coating film of the anaerobically curable adhesive) in an adherend having the layer of the anaerobically curable adhesive on the outermost surface to face one surface of an adherend being a bonding object. The bonding of the adherend may also be performed so as to allow a surface of a layer of the anaerobically curable adhesive in an adherend having the layer of the anaerobically curable adhesive on the outermost surface to face a surface of a layer obtained from the primer composition (for example, the coating film of the primer composition) in an adherend having the layer obtained from the primer composition on the outermost surface. The adherend having the layer of the anaerobically curable adhesive on the outermost surface is preferable such that the adherend and the layer obtained from the primer composition are contacted and the layer obtained from the primer composition and the layer of the anaerobically curable adhesive are contacted.

After such two or more adherends are bonded, the anaerobically curable adhesive is cured. The curing method is described below. A method for producing a laminate according to one embodiment may further include any other operation and/or any other step.

The anaerobically curable adhesive used in the method for producing a laminate according to the fourth aspect is the same as in the description with respect to the primer composition according to the first aspect. A preferred embodiment of the anaerobically curable adhesive used in the method for producing a laminate according to the fourth aspect is also the same as in the description with respect to the primer composition according to the first aspect. The primer composition used in the method for producing a laminate according to the fourth aspect is the same as in the description with respect to the primer composition according to the first aspect or the primer composition according to the second aspect. A preferred embodiment of the primer composition used in the method for producing a laminate according to the fourth aspect is also the same as in the description with respect to the primer composition according to the first aspect or the primer composition according to the second aspect.

Another aspect (fifth aspect) of the present invention relates to a laminate produced with the primer composition according to the first aspect, the primer composition according to the second aspect, or the composition kit for adhesion according to the third aspect, or by the method for producing a laminate according to the fourth aspect. An example of the laminate is not particularly limited, and is preferably a laminate including a plurality of steel plates, more preferably a laminate including a plurality of electromagnetic steel plates. In one embodiment, the laminate is particularly preferably a laminated steel plate.

The anaerobically curable adhesive used in the laminate according to the fifth aspect is the same as in the description with respect to the primer composition according to the first aspect. A preferred embodiment of the anaerobically curable adhesive used in the laminate according to the fifth aspect is also the same as in the description with respect to the primer composition according to the first aspect. The primer composition used in the laminate according to the fifth aspect is the same as in the description with respect to the primer composition according to the first aspect or the primer composition according to the second aspect. A preferred embodiment of the primer composition used in the laminate according to the fifth aspect is also the same as in the description with respect to the primer composition according to the first aspect or the primer composition according to the second aspect. A production method for obtaining the laminate according to the fifth aspect and a preferred embodiment thereof are the same respectively as in the descriptions with respect to the method for producing a laminate according to the fourth aspect.

### <Curing acceleration method of anaerobically curable adhesive with primer composition>

The primer composition according to the first aspect, the primer composition according to the second aspect and the composition kit for adhesion according to the third aspect are each preferably used in a curing acceleration method of an anaerobically curable adhesive. Here, the curing acceleration method of an anaerobically curable adhesive preferably includes curing an anaerobically curable adhesive in a state where a coating film of the primer composition according to the first aspect or a coating film of the primer composition according to the second aspect and the anaerobically curable adhesive are contacted. Accordingly, another aspect (sixth aspect) of the present invention can also be said to relate to a curing acceleration method of an anaerobically curable adhesive, including curing an anaerobically curable adhesive in a state where a coating film of the primer composition according to the first aspect or the primer composition according to the second aspect and the anaerobically curable adhesive are contacted. A curing acceleration method of an anaerobically curable adhesive according to one embodiment preferably includes performing coating with the primer composition according to the first aspect or the primer composition according to the second aspect, performing coating with an anaerobically curable adhesive after coating with the primer composition so that the anaerobically curable adhesive is in contacted with a coating film of the primer composition, and curing the anaerobically curable adhesive after coating with the anaerobically curable adhesive. According to the curing acceleration method of an anaerobically curable adhesive according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced. The coating film of the primer composition may be partially or completely dried and/or cured. The coating film of the primer composition may be dried and/or cured, for example, to such an extent that the anaerobically curable adhesive can be laminated. The curing method is described below. A curing acceleration method of an anaerobically curable adhesive according to one embodiment may further include any other operation and/or any other step.

The anaerobically curable adhesive in the curing acceleration method according to the present aspect is the same as in the description with respect to the primer composition according to the first aspect. A preferred embodiment of the anaerobically curable adhesive in the curing acceleration method according to the present aspect is also the same as in the description with respect to the primer composition according to the first aspect. The primer composition in the curing acceleration method according to the present aspect is the same as in the description with respect to the primer composition according to the first aspect or the primer composition according to the second aspect. A preferred embodiment of the primer composition in the curing acceleration method according to the present aspect is also the same as in the description with respect to the primer composition according to the first aspect or the primer composition according to the second aspect. In one embodiment, the anaerobically curable adhesive preferably contains the above-described components (C) to (E). In one embodiment, the anaerobically curable adhesive preferably contains one or more compounds selected from the group consisting of a urethane-modified (meth)acrylate, an epoxy-modified (meth)acrylate, and a (meth)acrylate having an aromatic ring.

### <Curing method>

Examples of the method for curing the anaerobically curable adhesive include, but are not particularly limited to, anaerobic curing at ordinary temperature and anaerobic curing under heating. By using the primer composition according to the first aspect, the primer composition according to the second aspect or the primer composition in the composition kit for adhesion according to the third aspect in combination with the anaerobically curable adhesive, the curing rate of the anaerobically curable adhesive can be remarkably enhanced. Therefore, therefore, in one preferable embodiment, the anaerobically curable adhesive can also be sometimes cured at ordinary temperature. Here, the curing temperature is not particularly limited, and, for example, may be a temperature in a range of 20 to 25°C, or may be 25°C. The curing time is not particularly limited. In one preferable embodiment, the anaerobically curable adhesive can also be sometimes cured at 1 minute to 24 hours. The curing time may be, for example, 30 minutes to 2 hours.

### <Method for producing primer composition and method for producing composition kit for adhesion>

Another aspect (seventh aspect) of the present invention relates to a method for producing a primer composition, including mixing the component (A) and the component (B) in an amount of 35 parts by mass or less of the component (A) based on 100 parts by mass of the component (B). According to a primer composition produced by the production method according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced. A method for producing a primer composition according to one embodiment preferably includes mixing 0.1 to 35 parts by mass of the component (A) based on 100 parts by mass of the component (B). In a method for producing a primer composition according to one embodiment, an anaerobically curable adhesive preferably contains one or more compounds selected from the group consisting of a urethane-modified (meth)acrylate, an epoxy-modified (meth)acrylate, and a (meth)acrylate having an aromatic ring. A method for producing a primer composition according to one embodiment may further include, if necessary, mixing one, or two or more other components (one, or two or more other components in the above-described primer composition). The primer compositions according to the above-described aspects are preferably produced by the method for producing a primer composition according to the present aspect.

Another aspect (eighth aspect) of the present invention relates to a method for producing a composition kit for adhesion, in which the production method includes producing a primer composition by the method for producing a primer composition according to the above-described aspect, and producing an anaerobically curable adhesive. According to a composition kit for adhesion produced by the production method according to the present aspect, not only deterioration in performance (deterioration in lubrication performance over time) of a primer composition containing a curing accelerator and a lubricating oil (for example, a press working oil) can be suppressed, but also the curing rate and the adhesion strength of an anaerobically curable adhesive can be enhanced. A method for producing an anaerobically curable adhesive according to one embodiment may further include, if necessary, mixing the components (C) to (E). A method for producing an anaerobically curable adhesive according to one embodiment may further include, if necessary, mixing one, or two or more other components (one, or two or more other components in the above-described anaerobically curable adhesive). The composition kit for adhesion according to the above-described aspect is preferably produced by the method for producing a composition kit for adhesion according to the present aspect.

The type of each raw material and the amount of use of each raw material in the anaerobically curable adhesive in the production methods according to these aspects may be the same as in the descriptions of the type of each component and the content of each component in the anaerobically curable adhesive in the description of the primer composition according to the first aspect. The type of each raw material and the amount of use of each raw material in the primer composition in the production methods according to these aspects may be the same as in the descriptions of the type of each raw material and the content of each raw material in the primer composition according to the first aspect or the primer composition according to the second aspect. Preferred embodiments of the type of each raw material and the amount of use of each raw material in the anaerobically curable adhesive in the production methods according to these aspects may also be the same as in the descriptions of preferred embodiments of the type of each component and the content of each component in the anaerobically curable adhesive in the description of the primer composition according to the first aspect. Preferred embodiments of the type of each raw material and the amount of use of each raw material in the primer composition in the production methods according to these aspects may also be the same as in the descriptions of preferred embodiments of the type of each raw material and the content of each raw material in the primer composition according to the first aspect or the primer composition according to the second aspect.

### Examples

Next, the present invention is described in further detail with reference to Examples, but the present invention is not limited only to these Examples.

### [Examples 1 to 6 and Comparative Examples 1 to 4]

### <Preparation of primer composition>

Primer compositions of Examples 1 to 6 and Comparative Examples 1 to 3 were each prepared. Specifically, (A-2) was weighed in a glass container, (A-1) was added to (A-2), and stirring was performed with THREE-ONE MOTOR of Shinto Scientific Co., Ltd., for 30 minutes, to obtain component (A). Furthermore, component (A) was added to component (B), and stirring was performed for 30 minutes. When no (A-2) was contained, (A-1) was directly added to component (B), and stirring was performed for 30 minutes. The detailed amounts of preparation were according to Table 1. In Table 1, all numerical values with respect to the amount of each material of the primer compositions are designated based on part(s) by mass.

### <Adjustment of anaerobically curable adhesive>

Components (C) to (E) and any other component were weighed in a glass container, and these components were stirred with THREE-ONE MOTOR of Shinto Scientific Co., Ltd., for 60 minutes, to obtain an anaerobically curable adhesive. Specifically, (C-1), (C-2), (C-3), component (D), (E-1), (E-2) and any other component (2,6-di-t-butyl-p-cresol) were weighed and stirred with THREE-ONE MOTOR of Shinto Scientific Co., Ltd., for 60 minutes, to mix these components, thereby obtaining an anaerobically curable adhesive.

The details of materials used are as follows.

### [Materials of primer composition]

### <<Component (A): curing accelerator>>

· (A-1): copper neodecanoate (reagent)
· (A-2): acetone (reagent)

### <<Component (B): lubricating oil>>

· Press working oil (G-6338F manufactured by Nihon Kohsakuyu Co., Ltd., hydrogenated petroleum fraction: 50% by mass or more)

### [Materials of anaerobically curable adhesive]

### <<Component (C): compound having one or more (meth)acryloyl groups>>

### (Oligomer having one or more (meth)acryloyl groups in molecule)

· (C-1): urethane-modified acrylate having two acryloyl groups at both ends 45 parts by mass
· (C-2): epoxy-modified acrylate having two acryloyl groups at both ends 20 parts by mass

### (Monomer having one or more (meth)acryloyl groups in molecule)

· (C-3): 2-hydroxyethyl methacrylate 35 parts by mass.

Here, (C-1) was a urethane-modified acrylate having two acryloyl groups at both ends and having a polyether backbone, and (C-2) was an epoxy-modified acrylate having two acryloyl groups at both ends and having a bisphenol A-type backbone.

### <<Component (D): organic peroxide>>

· Cumene hydroperoxide 1 part by mass

### <<Component (E): anaerobically curable catalyst>>

· (E-1): saccharin 1.5 parts by mass
· (E-2): 1-acetyl-2-phenylhydrazine 0.5 parts by mass

### <<Other component>>

· 2,6-Di-t-butyl-p-cresol 0.1 parts by mass.

### [Table 1]

**(Table 1)**

| | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| A-1 | Copper neodecanoate | | 1.0 | 0.9 | 1.6 | 2.4 | 2.3 | 3.0 | 3.9 | 6.1 | 9.1 | 0 |
| A-2 | Acetone | | 10.1 | 16.7 | 16.0 | 15.3 | 22.7 | 30.3 | 39.0 | 60.6 | 90.9 | 0 |
| A | Total of curing accelerator | | 11.1 | 17.6 | 17.6 | 17.6 | 25.0 | 33.3 | 42.9 | 66.7 | 100.0 | 0.0 |
| B | Press working oil | | 100 | 100 | 100 | 100 | 100 | 100 | 100 | 100 | 100 | 100 |
| Maximum coefficient of friction | Initial stage | | 0.23 | 0.28 | 0.23 | 0.23 | 0.24 | 0.22 | 0.28 | 0.28 | 0.30 | 0.10 |
| | After lapse of 30 minutes | | 0.22 | 0.22 | 0.24 | 0.30 | 0.35 | 0.42 | 0.49 | 0.50 | 0.75 | 0.10 |
| Shear adhesion strength | | MPa | 18.2 | 20.9 | 20.4 | 23.0 | 19.0 | 22.4 | 19.9 | Unmeasured | Unmeasured | 0 |

### <Evaluation of primer composition>

Each evaluation in Table 1 was performed by the following method.

### [Maximum coefficient of friction (initial stage and after lapse of 30 minutes)]

1 g of each of the primer compositions was dropped to a SPCC-SD test piece of 25 mm width × 100 mm length × 1.6 mm thickness, and applied and spread with a waste cloth, to provide a test piece. A metallic cylinder, while being pushed to the produced test piece at a load of 200 N in a perpendicular direction, was reciprocated 400 times in a horizontal direction to the test piece for 30 minutes, and the coefficient of friction was measured. The maximum value of the coefficient of friction over 5 minutes from 0 to 5 minutes from the start of measurement was defined as the maximum coefficient of friction at the initial stage, and the maximum value of the coefficient of friction over 5 minutes from 25 to 30 minutes from the start of measurement was defined as the maximum coefficient of friction after a lapse of 30 minutes. A test apparatus used here was a vibration friction wear tester manufactured by Shinto Scientific Co., Ltd., and a test method was carried out according to ASTM D6425. The maximum coefficients of friction at the initial stage and after a lapse of 30 minutes are preferably 0.45 or less, more preferably 0.30 or less.

### [Shear adhesion strength]

A SPCC-SD test piece of 25 mm width × 100 mm length × 1.6 mm thickness was coated with 0.1 g of each of the primer compositions, and left to stand at 25°C for 1 hour, to dry each of the primer compositions. Next, the test piece subjected to primer treatment was coated with 0.1 g of the anaerobically curable adhesive prepared as above, and overlapped with another test piece subjected to primer treatment so that the length of a longitudinal end of such another test piece was 10 mm, and the resultant was secured at 25°C for 1 hour, to obtain an adhesion test piece. Next, an end of the adhesion test piece was pulled at a tensile speed of 50 mm/min with a universal tensile tester, to measure the shear adhesion strength (unit: MPa) according to JIS K6850 (1999). A shear adhesion strength in the case of use of the anaerobically curable adhesive and the primer composition, of 15 MPa or more, was determined as pass. In Table 1, "Unmeasured" indicates no measurement of the shear adhesion strength due to a maximum coefficient of friction of more than 0.5 after a lapse of 30 minutes and deterioration in performance of the press working oil.

In Comparative Example 4, the shear adhesion strength was measured by the same method as described above except for coating with the above-described press working oil instead of the primer composition.

When the shear adhesion strength was measured by the same method as described above except that an adhesion test piece was obtained with a test piece not subjected to coating with and drying of any primer composition and not subjected to any primer treatment, it was confirmed that the shear adhesion strength of the adhesion test piece secured at 25°C for 1 hour was 2 MPa and the shear adhesion strength of the adhesion test piece obtained by securing at 25°C for 24 hours was 17 MPa.

As shown in Table 1, the primer compositions of Examples 1 to 6, including 35 parts by mass or less of component (A) based on 100 parts by mass of component (B), exhibited a favorable value as the maximum coefficient of friction being a characteristic value relating to identification of the press working oil, even after a lapse of 30 minutes, and also exhibited a favorable value as the shear adhesion strength. In particular, the primer compositions of Examples 1 to 4, including 20 parts by mass or less of component (A) based on 100 parts by mass of component (B), exhibited favorable results. In this regard, the primer compositions of Comparative Examples 1 to 3, including a large amount of component (A), exhibited an extremely increased maximum coefficient of friction after a lapse of 30 minutes, and it was indicated that performance (lubrication performance) of a primer composition containing a curing accelerator and a lubricating oil (for example, press working oil) was reduced over time.

In the case of Comparative Example 4 in which no curing accelerator was used and only the press working oil was used, no shear adhesion strength was exhibited at 1 hour from bonding with the anaerobically curable adhesive.

It has been confirmed from the foregoing that the primer composition of the first aspect or the primer composition of the second aspect is used, thereby allowing for contribution to curing acceleration and shear adhesion strength of an anaerobically curable adhesive without deterioration in performance (lubrication performance) of a primer composition containing a curing accelerator and a lubricating oil (for example, a press working oil) over time.

### Industrial applicability

In the present invention, the primer composition can allow a laminated steel plate to be more efficiently produced and is industrially very useful because, when a laminated steel plate is assembled, not only an increase in coefficient of friction of a primer composition containing a curing accelerator and a lubricating oil (for example, a press working oil) can be suppressed, but also enhancements in curing rate and adhesion strength of an anaerobically curable adhesive can be realized.

The present application is based on Japanese Patent Application No. 2023-213834 filed on December 19, 2023, and the content of the disclosure is entirely incorporated.

## Claims

1. A primer composition comprising the following component (A) and the following component (B), wherein the component (A) contains a metal complex (A-1), and the component (A) is in an amount of 35 parts by mass or less based on 100 parts by mass of the component (B);
Component (A): curing accelerator of anaerobically curable adhesive,
Component (B): lubricating oil.

2. The primer composition according to claim 1, wherein the component (A) is in an amount of 0.1 to 35 parts by mass based on 100 parts by mass of the component (B).

3. The primer composition according to claim 1, wherein the component (A) further contains a solvent (A-2).

4. The primer composition according to claim 3, wherein the (A-2) is a ketone-based solvent and/or an alcohol-based solvent.

5. The primer composition according to any one of claims 1 to 4, wherein the anaerobically curable adhesive contains one or more compounds selected from the group consisting of a urethane-modified (meth)acrylate, an epoxy-modified (meth)acrylate, and a (meth)acrylate having an aromatic ring.

6. The primer composition according to any one of claims 1 to 4, for use in assembling of a laminated steel plate.

7. The primer composition according to any one of claims 1 to 4, wherein the component (B) is a press working oil.

8. A method for producing a laminate, comprising
coating an adherend with the primer composition according to any one of claims 1 to 4,
coating the adherend, a coating film of the primer composition, or both thereof with an anaerobically curable adhesive, and
bonding the adherend and an adherend being a bonding object, after coating with the primer composition and coating with the anaerobically curable adhesive, and thereafter curing the anaerobically curable adhesive.

9. The production method according to claim 8, wherein the anaerobically curable adhesive contains one or more compounds selected from the group consisting of a urethane-modified (meth)acrylate, an epoxy-modified (meth)acrylate, and a (meth)acrylate having an aromatic ring.

10. A method for producing a laminated steel plate, comprising the following Steps 1 to 4;
Step 1: coating a strip-shaped steel plate with the primer composition according to any one of claims 1 to 4;
Step 2: punching the strip-shaped steel plate coated with the primer composition into a predetermined shape to obtain a thin steel plate coated with the primer composition;
Step 3: coating the thin steel plate coated with the primer composition, with an anaerobically curable adhesive in a planar or spot-like manner, to bond and laminate the thin steel plate and a thin steel plate being a bonding object; and
Step 4: curing the anaerobically curable adhesive under predetermined conditions to obtain a laminated steel plate.

11. The production method according to claim 10, wherein the anaerobically curable adhesive contains one or more compounds selected from the group consisting of a urethane-modified (meth)acrylate, an epoxy-modified (meth)acrylate, and a (meth)acrylate having an aromatic ring.

12. A composition kit for adhesion, comprising an anaerobically curable adhesive and the primer composition according to any one of claims 1 to 4.
